(19) Europäisches Patentamt / European Patent Office / Office européen des brevets

(11) **EP 4 354 872 A1**

(12) **EUROPEAN PATENT APPLICATION**
published in accordance with Art. 153(4) EPC

(43) Date of publication:
**17.04.2024 Bulletin 2024/16**

(21) Application number: **22819652.3**

(22) Date of filing: **10.06.2022**

(51) International Patent Classification (IPC):
**H04N 19/60** (2014.01)     **H04N 19/625** (2014.01)
**H04N 19/12** (2014.01)     **H04N 19/124** (2014.01)

(52) Cooperative Patent Classification (CPC):
**H04N 19/12; H04N 19/124; H04N 19/13;**
**H04N 19/60; H04N 19/625**

(86) International application number:
**PCT/CN2022/098193**

(87) International publication number:
**WO 2022/258055 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.06.2021 CN 202110654116**
**20.07.2021 CN 202110817311**

(71) Applicant: **Vivo Mobile Communication Co., Ltd.**
**Dongguan, Guangdong 523863 (CN)**

(72) Inventors:
• **ZHANG, Wei**
  **Dongguan, Guangdong 523863 (CN)**
• **LU, Jingyun**
  **Dongguan, Guangdong 523863 (CN)**
• **LV, Zhuoyi**
  **Dongguan, Guangdong 523863 (CN)**
• **YANG, Fuzheng**
  **Dongguan, Guangdong 523863 (CN)**
• **DAI, Na**
  **Dongguan, Guangdong 523863 (CN)**

(74) Representative: **Lavoix**
**Bayerstraße 83**
**80335 München (DE)**

(54) **POINT CLOUD ATTRIBUTE INFORMATION ENCODING AND DECODING METHOD AND APPARATUS, AND RELATED DEVICE**

(57) This application discloses a point cloud attribute information encoding method and apparatus, a point cloud attribute information decoding method and apparatus, and a related device. The point cloud attribute information encoding method includes: obtaining first information; determining, based on second information associated with the first information, whether to perform DCT transform on K to-be-coded points; in a case that it is determined to perform DCT transform on the K to-be-coded points, performing DCT transform on the K to-be-coded points to obtain a transform coefficient of the K to-be-coded points; and quantizing the transform coefficient of the K to-be-coded points and performing entropy coding based on a quantized transform coefficient, to generate a binary bit stream. The first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is an integer greater than 1.

FIG. 3

EP 4 354 872 A1

**Description**

**CROSS-REFERENCE TO RELATED APPLICATIONS**

This application claims priority to Chinese Patent Application No. 202110654116.7 filed in China on June 11, 2021, and to Chinese Patent Application No. 202110817311.7 filed in China on July 20, 2021, which are incorporated herein by reference in their entireties.

**TECHNICAL FIELD**

This application pertains to the field of point cloud processing technologies, and specifically relates to a point cloud attribute information encoding method and apparatus, a point cloud attribute information decoding method and apparatus, and a related device.

**BACKGROUND**

In the point cloud digital audio video encoding/decoding standard (Audio Video coding Standard, AVS) encoder framework, geometric information of a point cloud and attribute information corresponding to each point are encoded separately. At present, attribute information coding is divided into attribute prediction coding and attribute transform coding. The attribute transform coding is directly performing transform on original attribute information, and for a region with a relatively large local transform amplitude, there is still a relatively large amount of redundant information in an obtained transform coefficient, which leads to lower coding efficiency.

**SUMMARY**

Embodiments of this application provide a point cloud attribute information encoding method and apparatus, a point cloud attribute information decoding method and apparatus, and a related device, which can resolve the existing problem of low efficiency in encoding point cloud attribute information.

According to a first aspect, a point cloud attribute information encoding method is provided, including:

obtaining first information;
determining, based on second information associated with the first information, whether to perform discrete cosine transform DCT transform on K to-be-coded points;
in a case that it is determined to perform DCT transform on the K to-be-coded points, performing DCT transform on the K to-be-coded points to obtain a transform coefficient of the K to-be-coded points; and
quantizing the transform coefficient of the K to-be-coded points and performing entropy coding based on a quantized transform coefficient, to generate a binary bit stream; where
the first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is an integer greater than 1.

According to a second aspect, a point cloud attribute information decoding method is provided, including:

obtaining third information;
determining, based on fourth information associated with the third information, whether to perform inverse DCT transform on K to-be-decoded points;
in a case that it is determined to perform inverse DCT transform on the K to-be-decoded points, performing inverse DCT transform on the K to-be-decoded points, so as to obtain attribute residual information for the K to-be-decoded points; and
obtaining attribute reconstruction information for the K to-be-decoded points based on the attribute residual information and attribute prediction information that are for the K to-be-decoded points, so as to decode un-decoded points in a to-be-decoded point cloud; where
the third information includes the K to-be-decoded points and the fourth information includes attribute prediction information for the K to-be-decoded points; or the third information includes N decoded points prior to the K to-be-decoded points, and the fourth information includes attribute reconstruction information for the N decoded points, K being a positive integer and N being an integer greater than 1.

According to a third aspect, a point cloud attribute information encoding apparatus is provided, including:

a first obtaining module, configured to obtain first information;
a first determining module, configured to determine, based on second information associated with the first information, whether to perform discrete cosine transform DCT transform on K to-be-coded points;
a first transform module, configured to: in a case that it is determined to perform DCT transform on the K to-be-coded points, perform DCT transform on the K to-be-coded points to obtain a transform coefficient of the K to-be-coded points; and
an encoding module, configured to quantize the transform coefficient of the K to-be-coded points and perform entropy coding based on a quantized transform coefficient, to generate a binary bit stream; where
the first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is an integer greater than 1.

According to a fourth aspect, a point cloud attribute information decoding apparatus is provided, including:

a second obtaining module, configured to obtain third information;
a second determining module, configured to determine, based on fourth information associated with the third information, whether to perform inverse DCT transform on K to-be-decoded points;
a second transform module, configured to: in a case that it is determined to perform inverse DCT transform on the K to-be-decoded points, perform inverse DCT transform on the K to-be-decoded points, so as to obtain attribute residual information for the K to-be-decoded points; and
a decoding module, configured to obtain attribute reconstruction information for the K to-be-decoded points based on the attribute residual information and attribute prediction information that are for the K to-be-decoded points, so as to decode un-decoded points in a to-be-decoded point cloud; where
the third information includes the K to-be-decoded points and the fourth information includes attribute prediction information for the K to-be-decoded points; or the third information includes N decoded points prior to the K to-be-decoded points, and the fourth information includes attribute reconstruction information for the N decoded points, K being a positive integer and N being an integer greater than 1.

According to a fifth aspect, a terminal is provided, where the terminal includes a processor, a memory, and a program or instructions stored in the memory and capable of running on the processor, and when the program or the instructions are executed by the processor, the steps of the point cloud attribute information encoding method according to the first aspect are implemented, or the steps of the point cloud attribute information decoding method according to the second aspect are implemented.

According to a sixth aspect, a terminal is provided, including a processor and a communication interface, where the processor is configured to:

obtain first information;
determine, based on second information associated with the first information, whether to perform discrete cosine transform DCT transform on K to-be-coded points;
in a case that it is determined to perform DCT transform on the K to-be-coded points, perform DCT transform on the K to-be-coded points to obtain a transform coefficient of the K to-be-coded points; and
quantize the transform coefficient of the K to-be-coded points and perform entropy coding based on a quantized transform coefficient, to generate a binary bit stream; where
the first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is an integer greater than 1; or
the processor is configured to:

obtain third information;
determine, based on fourth information associated with the third information, whether to perform inverse DCT transform on K to-be-decoded points;
in a case that it is determined to perform inverse DCT transform on the K to-be-decoded points, perform inverse DCT transform on the K to-be-decoded points, so as to obtain attribute residual information for the K to-be-decoded points; and

obtaining attribute reconstruction information for the K to-be-decoded points based on the attribute residual information and attribute prediction information that are for the K to-be-decoded points, so as to decode undecoded points in a to-be-decoded point cloud; where

the third information includes the K to-be-decoded points and the fourth information includes attribute prediction information for the K to-be-decoded points; or the third information includes N decoded points prior to the K to-be-decoded points, and the fourth information includes attribute reconstruction information for the N decoded points, K being a positive integer and N being an integer greater than 1.

According to a seventh aspect, a readable storage medium is provided, where a program or instructions are stored in the readable storage medium, and when the program or the instructions are executed by a processor, the steps of the point cloud attribute information encoding method according to the first aspect are implemented, or the steps of the point cloud attribute information decoding method according to the second aspect are implemented.

According to an eighth aspect, a chip is provided, where the chip includes a processor and a communication interface, the communication interface is coupled to the processor, and the processor is configured to run a program or instructions to implement the steps of the point cloud attribute information encoding method according to the first aspect or the steps of the point cloud attribute information decoding method according to the second aspect.

According to a ninth aspect, a computer program/program product is provided, where the computer program/program product is stored in a non-volatile storage medium, and the program/program product is executed by at least one processor to implement the steps of the point cloud attribute information encoding method according to the first aspect or the steps of the point cloud attribute information decoding method according to the second aspect.

According to a tenth aspect, a communication device is provided, configured to execute the steps of the point cloud attribute information encoding method according to the first aspect or the steps of the point cloud attribute information decoding method according to the second aspect.

In the embodiments of this application, in the process of encoding the to-be-coded point cloud, it is necessary to determine, based on the attribute prediction information for the to-be-coded points or the attribute reconstruction information for the coded points, whether to perform DCT transform on the to-be-coded points. In a case that it is determined to perform DCT transform on the to-be-coded points, DCT transform is performed on the to-be-coded points, so as to convert a dispersed distribution of the attribute information in the spatial domain to a relatively centralized distribution in the transform domain. In this way, signal energy is concentrated in a few coefficients, facilitating quantization and coding. This removes attribute redundancy, thereby improving attribute coding efficiency and reconstruction performance.

## BRIEF DESCRIPTION OF DRAWINGS

FIG. 1 is a diagram of the AVS codec framework;
FIG. 2 is a flowchart of performing transform at an encoding end;
FIG. 3 is a flowchart of a point cloud attribute information encoding method according to an embodiment of this application;
FIG. 4 is a flowchart of another point cloud attribute information encoding method according to an embodiment of this application;
FIG. 5 is a flowchart of a point cloud attribute information decoding method according to an embodiment of this application;
FIG. 6 is a structural diagram of a point cloud attribute information encoding apparatus according to an embodiment of this application;
FIG. 7 is a structural diagram of a point cloud attribute information decoding apparatus according to an embodiment of this application;
FIG. 8 is a structural diagram of a communication device according to an embodiment of this application; and
FIG. 9 is a structural diagram of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

An encoder corresponding to the encoding method and a decoder corresponding to the decoding method in the embodiments of this application may be a terminal. The terminal may also be referred to as a terminal device or user equipment (User Equipment, UE), and the terminal may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device) or vehicle user equipment (VUE), or pedestrian user equipment (PUE). The wearable device includes: a smart watch, a wrist band, earphones, glasses, or the like. It should be noted that a specific type of the terminal is not limited in the embodiments of this application.

To better understand the technical solution of this application, the following describes related concepts that may be involved in this application.

In the point cloud digital audio video encoding/decoding standard (Audio Video coding Standard, AVS) encoder framework, geometric information of a point cloud and attribute information corresponding to each point are encoded separately.

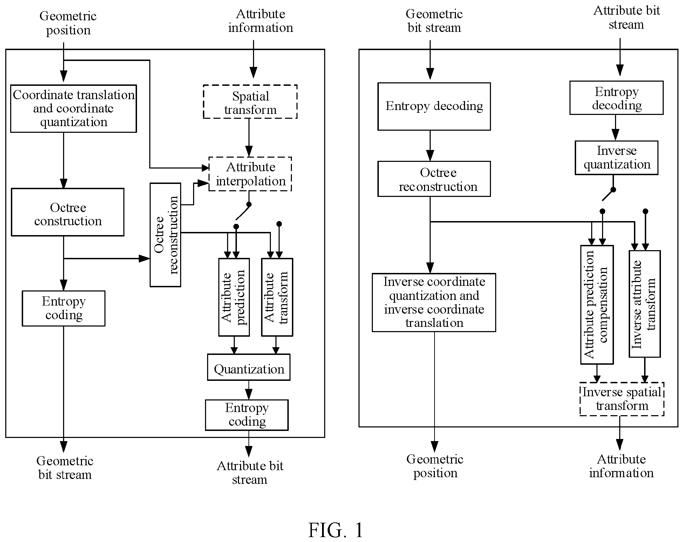

Refer to FIG. 1. FIG. 1 is a diagram of the AVS codec framework. During encoding of geometric information, coordinate transformation is first performed on the geometric information so that a point cloud is all contained in one bounding box (bounding box). Then, quantization is performed. This step of quantization mainly plays the role of scaling; and due to quantization rounding, some points may have the same geometric information. It is determined, based on parameters, whether to remove duplicated points. The quantization and duplicated point removal process belongs to the preprocessing process. Next, the bounding box is divided according to a breadth-first traversal order (octree/quadtree/binary tree), and encoding is performed on occupancy codes of each node. In the octree-based geometric code framework, the bounding box is sequentially divided into sub-cubes. Non-empty sub-cubes (which contain points in the point cloud) are further divided until leaf nodes obtained through division reach 1x1x1 unit cubes. Then, points contained in the leaf nodes are encoded, completing encoding of the geometric octree finally to generate a binary bit stream. In an octree-based geometric decoding process, a decoding end continuously parses out occupancy codes of each node according to a breadth-first traversal order, continuously divides the nodes sequentially until 1x1x1 unit cubes are obtained through division, and then performs parsing to obtain points contained in each leaf node, so as to finally restore geometrically reconstructed point cloud information.

Attribute encoding is mainly performed on color and reflectance information and the like. First, it is determined whether to perform color space conversion. If color space conversion is performed, color information is converted from the red-green-blue (RGB) color space to the YUV (Y is a luminance component and UV is a chrominance component) color space. Then, a reconstructed point cloud is recolored using an original point cloud, so that uncoded attribute information is corresponding to reconstructed geometric information. There are two methods for encoding attribute information: attribute prediction coding and attribute transform coding. In the attribute prediction process, the point cloud is first reordered, and then differential prediction is performed. There are two methods of reordering: Morton reordering and Hilbert (Hilbert) reordering. For catlA and cat2 sequences, Hilbert reordering is performed; for catlB and cat3 sequences, Morton reordering is performed. Attribute prediction of the sorted point cloud is performed in a differential manner, and finally prediction residual is quantized and entropy coded to generate a binary bit stream. The attribute transform process is as follows: first perform wavelet transform on attributes of the point cloud and quantize a transform coefficient, then perform inverse quantization and inverse wavelet transform to obtain an attribute reconstruction value; calculate a difference between the original attributes and the attribute reconstruction value to obtain attribute residual and quantize the attribute residual; finally, perform entropy coding on the quantized transform coefficient and attribute residual, to generate a binary bit stream. The decoding of attribute information is an inverse process of coding, and details are not described in detail herein.

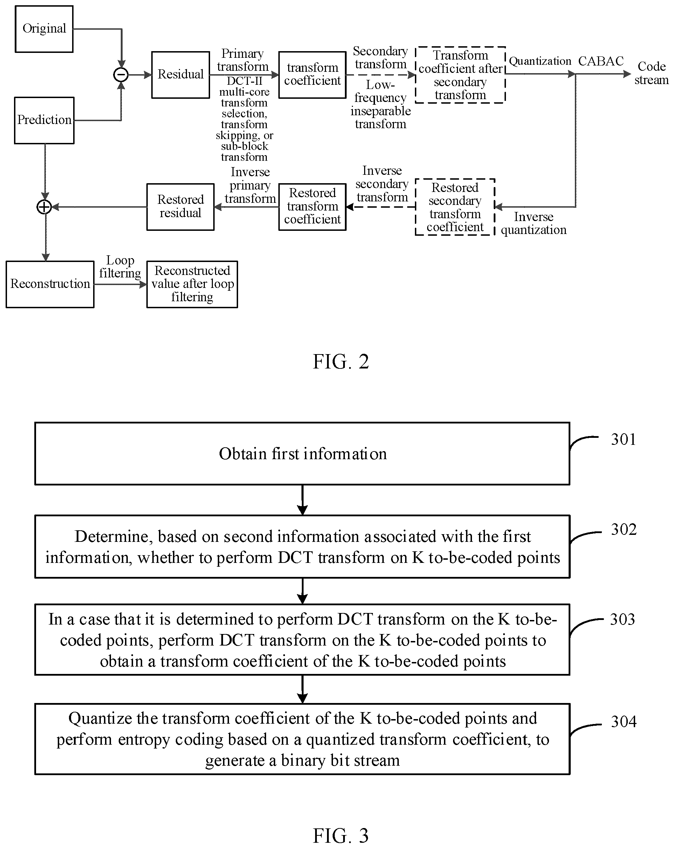

In image and video coding, discrete cosine transform (Discrete Cosine Transform, DCT) and discrete sine transform (Discrete Sine Transform, DST) are mainly used. Referring to FIG. 2, the transform process of the encoding end is as follows: first subtract a predicted signal from an original signal to obtain a residual signal, and then perform primary DCT transform on the residual signal to obtain a primary transform coefficient; perform secondary transform on low-frequency components of the primary transform coefficient block to obtain a secondary transform coefficient with more concentrated energy distribution, and then perform quantization and entropy coding to obtain a bit stream; then perform inverse quantization, inverse secondary transform, and inverse primary transform on the quantized coefficient to obtain restored residual, and add the residual to the predicted signal to obtain a reconstructed signal, and then perform loop filtering to reduce distortion. The secondary transform is not always performed, as shown in the dashed part of FIG. 2.

In existing video coding standards, attribute transform coding is to perform direct transform on the original attribute information, and for a region with relatively large local transform amplitude, there is still a relatively large amount of redundant information in the obtained transform coefficient, resulting in lower coding efficiency.

The following describes in detail a point cloud attribute information encoding method and apparatus, a point cloud attribute information decoding method and apparatus, and a related device provided in the embodiments of this application by using specific embodiments and application scenarios thereof with reference to the accompanying drawings.

Referring to FIG. 3, FIG. 3 is a flowchart of a point cloud attribute information encoding method according to an embodiment of this application. The method may be applied to a terminal such as a mobile phone, a tablet computer, or a computer. As shown in FIG. 3, the method includes the following steps.

Step 301: Obtain first information.

In this embodiment of this application, the first information may include to-be-coded points or may include coded points.

Optionally, the first information includes K to-be-coded points, and the step 301 includes:
performing sorting on the points of the to-be-coded point cloud and obtaining K to-be-coded points in the sorted to-be-coded point cloud.

In this embodiment of this application, after the to-be-coded point cloud is obtained, sorting may be performed on the to-be-coded point cloud. For example, in a case that attribute information is mainly color-specific, it is first determined whether the to-be-coded point cloud needs to be converted to a color space, and if conversion of the color space is performed, color information of the to-be-coded point cloud may be converted from an RGB color space to a YUV color space, and then an original point cloud is used to recolor the to-be-coded point cloud, so that attribute information of the to-be-coded point cloud corresponds to reconstructed geometric information. Sorting is performed on the points of the to-be-coded point cloud obtained after recoloring and color space conversion. Assuming that the to-be-coded point cloud includes N points and each point is denoted as $p_n(n = 1,2, ..., N)$, sorting is performed on the points of the to-be-coded point cloud; after sorting, each point may be denoted as $\hat{p}_n(n = 1,2, \cdots, N)$; and K to-be-coded points are selected from the sorted to-be-coded point cloud.

Optionally, sorting of the to-be-coded point cloud may be implemented based on a Hilbert code or a Morton code. The performing sorting on the points of a to-be-coded point cloud and obtaining K to-be-coded points in the sorted to-be-coded point cloud includes:

calculating a Hilbert code corresponding to each point in the to-be-coded point cloud, performing sorting on the points of the to-be-coded point cloud based on the Hilbert codes, and sequentially selecting the K to-be-coded points in the sorted to-be-coded point cloud; or
calculating a Morton code corresponding to each point in the to-be-coded point cloud, performing sorting on the points of the to-be-coded point cloud based on the Morton codes, and sequentially selecting the K to-be-coded points in the sorted to-be-coded point cloud.

It should be noted that the K to-be-coded points may be selected based on a specific order. For example, assuming that the to-be-coded point cloud includes nine to-be-coded points. After Hilbert codes corresponding to the nine to-be-coded points are calculated and sorting is performed on the nine to-be-coded points according to Hilbert, every three to-be-coded points may be divided into one group, three points ranking at the top are first selected as the K to-be-coded points, and then subsequent processes such as attribute prediction and the like are performed; three points after the first three points are selected as one group in turn and the processes of attribute prediction and the like are performed; and the last three points are selected for the processes of attribute prediction and the like.

For the selected K to-be-coded points, it needs to determine whether a to-be-coded point in the K to-be-coded points is a duplicated point with a coded point; if a to-be-coded point is duplicated with a coded point, attribute residual information of the to-be-coded point and the coded point may be directly calculated, and the to-be-coded point is not considered as a point in the K to-be-coded points; or if a to-be-coded point is not duplicated with a coded point, attribute information prediction may be performed for the K to-be-coded points based on the coded point to obtain attribute prediction information for the K to-be-coded points. A specific method for attribute information prediction is described in subsequent embodiments.

Step 302: Determine, based on second information associated with the first information, whether to perform DCT transform on K to-be-coded points.

The first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is a positive integer greater than 1.

That is, in a case that the first information is K to-be-coded points and the second information is the attribute prediction information for the K to-be-coded points, it is determined, based on the attribute prediction information for the K to-be-coded points, whether to perform DCT transform on the K to-be-coded points; and in a case that the first information is the N coded points prior to the K to-be-coded points and the second information is the attribute reconstruction information for the N coded points, it is determined, based on the attribute reconstruction information for the N coded points, whether to perform DCT transform on the K to-be-coded points.

In this embodiment of this application, if it is determined, based on the attribute prediction information for the K to-be-coded points, whether to perform DCT transform on the K to-be-coded points, the attribute prediction information for the K to-be-coded points needs to be first obtained.

Optionally, before the step 302, the following is further included:

obtaining S neighboring points with a closest Manhattan distance to a target to-be-coded point according to a bi-Hilbert order or a bi-Morton order, where the target to-be-coded point is any one of the K to-be-coded points;
determining initial attribute prediction information for the target to-be-coded point based on the S neighboring points; and
determining attribute prediction information for the target to-be-coded point based on a first weight corresponding to the target to-be-coded point and the initial attribute prediction information.

The obtaining S neighboring points with a closest Manhattan distance to a target to-be-coded point according to a bi-Hilbert order or a bi-Morton order includes:
in a given preset search range, obtaining the preceding-order M points of the target to-be-coded point according to a Hilbert-1 order, obtaining the preceding-order N1 points and post-order N2 points of the target to-be-coded point according to a Hilbert-2 order, and obtaining the S neighboring points with the closest Manhattan distance to the target to-be-coded point within a target range determined based on M, N1, and N2.

Specifically, after the K to-be-coded points are determined, the target to-be-coded point is selected based on a preset principle, which may be, for example, selecting the target to-be-coded point sequentially in an order of the K to-be-coded points. Assuming that the K to-be-coded points are determined after the to-be-coded point cloud is sorted according to the Hilbert code, the target to-be-coded point may be determined sequentially based on the Hilbert code size corresponding to the K to-be-coded points.

For the target to-be-coded point, the preceding-order M points of the target to-be-coded point are first found according to the Hilbert-1 order, and then the preceding-order N1 points and post-order N2 points of the target to-be-coded point are found separately according to the Hilbert-2 order. In the M+N1+N2 points, the S neighboring points with the closest Manhattan distance to the target to-be-coded point are selected, the initial attribute prediction information for the target to-be-coded point is determined based on the S neighboring points, and then the attribute prediction information for the target to-be-coded point is determined based on the first weight corresponding to the target to-be-coded point and the initial attribute prediction information. It should be noted that M, N1, and N2 are all positive integers.

Optionally, the given preset search range is determined based on a correlation between an initial number of points of a point cloud sequence and a bounding box volume of an input point cloud.

The determining initial attribute prediction information for the target to-be-coded point based on the S neighboring points includes:
determining the initial attribute prediction information for the target to-be-coded point based on each neighboring point in the S neighboring points and a corresponding second weight, where the second weight is a reciprocal of a Manhattan distance between the target to-be-coded point and the neighboring point.

It can be understood that each neighboring point in the S neighboring points of the target to-be-coded point has a different Manhattan distance to the target to-be-coded point, and the second weight is a reciprocal of a Manhattan distance between the current neighboring point and the target to-be-coded point. In this case, the second weight corresponding to each of the neighboring points is different. The initial attribute prediction information for the target to-be-coded point may be a sum of products of the attribute information of neighboring points in the S neighboring points and corresponding second weights, so as to obtain the initial attribute prediction information for the target to-be-coded point through calculation.

Further, based on the foregoing manner of determining the initial attribute prediction information for the target to-be-coded point, the initial attribute prediction information for each to-be-coded point in the K to-be-coded points can be calculated. Based on the first weight corresponding to each of the to-be-coded points and the initial attribute prediction information, the attribute prediction information corresponding to each of the to-be-coded points can be then calculated.

For example, assuming that the initial attribute prediction information for the target to-be-coded point $p_n$ is $Pre_n$ and the initial attribute prediction information for the K to-be-coded points ($p_n, p_{n+1}, \cdots, p_{n+K-1}$) are respectively denoted as $Pre_n, Pre_{n+1}, \cdots, Pre_{n+K-1}$, the attribute prediction information for the K to-be-coded points may be denoted as $AttrPre_i$($i$

= $n$, $n + 1$, $\cdots$ , $n + K - 1$) . Assuming that the first weight of each to-be-coded point in the K to-be-coded points be $w_{ij}$ ($i$, $j = n$, $n + 1$, $\cdots$ , $n + K$ - 1), the attribute prediction information for the K to-be-coded points may be denoted as:

$$AttrPre_i = \sum_{j=n}^{n+K-1} w_{ij} Pre_j,$$

where

$AttrPre_i$ is the attribute prediction information for the K to-be-coded points, and $Pre_j$ is the initial attribute prediction information for the j-th point in the K points; where

$$\sum_{j=n}^{n+K-1} w_{ij} = 1 (i = n, n + 1, \cdots, n + K - 1)$$

For example, when $AttrPre_i = w_{ii}Pre_i$, that is, $w_{ii} = 1$, $w_{ij} = 0$($i \# j$), the attribute prediction information for each point in the current K to-be-coded points is equal to its initial attribute prediction information; when $AttrPre_i = w_{i,n+2}Pre_{n+2}$, that is, $w_{i,n+2} = 1$, $w_{ij} = 0$($j \neq n + 2$), each point in the current K to-be-coded points uses initial attribute prediction information for the 2nd point in this K points as its attribute prediction information.

Optionally, a sum of the first weights respectively corresponding to the K to-be-coded points is 1. For example, assuming that a value of K is 4, the sum of four first weights corresponding to the four to-be-coded points is 1.

Alternatively, the obtaining S neighboring points with a closest Manhattan distance to a target to-be-coded point according to a bi-Hilbert order or a bi-Morton order includes:

in the given preset search range, obtaining the preceding-order M points of the target to-be-coded point according to a Morton-1 order, obtaining the preceding-order N1 points and post-order N2 points of the target to-be-coded point according to a Morton-2 order, and obtaining the S neighboring points with the closest Manhattan distance to the target to-be-coded point within a target range determined based on M, N1, and N2.

Specifically, for the target to-be-coded point, the preceding-order M points of the target to-be-coded point are first found according to the Morton-1 order, and then the preceding-order N1 points and post-order N2 points of the target to-be-coded point are found separately according to the Morton-2 order. In the M+N1+N2 points, the S neighboring points with the closest Manhattan distance to the target to-be-coded point are selected, the initial attribute prediction information for the target to-be-coded point is determined based on the S neighboring points, and then the attribute prediction information for the target to-be-coded point is determined based on the first weight corresponding to the target to-be-coded point and the initial attribute prediction information. It should be noted that M, N1, and N2 are all positive integers.

Optionally, the given preset search range is determined based on a correlation between an initial number of points of a point cloud sequence and a bounding box volume of an input point cloud.

Further, after the S neighboring points with the closest Manhattan distance to the target to-be-coded point are obtained based on the Morton order, attribute weighted prediction is performed on the S neighboring points, with a weight being a reciprocal of the Manhattan distance between the current neighboring point and the target to-be-coded point, so as to obtain the initial attribute prediction information for the target to-be-coded point; and then, based on the first weight corresponding to the target to-be-coded point and the initial attribute prediction information, the attribute prediction information for the target to-be-coded point is calculated, and further the attribute prediction information for the K to-be-coded points is calculated. For a manner of obtaining the attribute prediction information, refer to the specific description for obtaining the S neighboring points based on the bi-Hilbert order and performing attribute prediction, with the difference only being that in this embodiment, obtaining of the S neighboring points is based on the bi-Morton order. The manner of obtaining the attribute prediction information will not be repeated herein.

Optionally, a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range or the second preset range. It should be noted that the search ranges of the first preset range, the second preset range and the third preset range may be manually set based on coding requirements.

The binary bit stream includes a first attribute parameter and a second attribute parameter, where the first attribute parameter is used to represent the first preset range and the second attribute parameter is used to represent the second preset range; and in a case that the post-order search range of the Hilbert-2 order or Morton-2 order is the third preset range, the binary bit stream further includes a third attribute parameter, where the third attribute parameter is used to represent the third preset range.

That is, the first preset range, second preset range, and third preset range may be written into a bit stream as an attribute information parameter set. In a case that the preceding-order search range of the Hilbert-2 order or the Morton-2 order is the same as the post-order search range of the Hilbert-2 order or the Morton-2 order, that is, in a case that both are the second preset range, only the first attribute parameter for representing the search range of the Hilbert-1 order or the Morton-1 order and the second attribute parameter for representing the preceding-order of the Hilbert-2 order or the Morton-2 order and the post-order of the Hilbert-2 order or the Morton-2 order need to be written in the bit stream. In a case that the preceding-order search range of the Hilbert-2 order or the Morton-2 order is different from the post-order search range of the Hilbert-2 order or the Morton-2 order, the first attribute parameter, the second attribute parameter, and the third attribute parameter need to be written into the binary bit stream. The attribute parameters are written into the bit stream, so that in the process of encoding the attribute information, the S neighboring points with the closest Manhattan distance to the target to-be-coded point can be determined based on the first preset range, the second preset range, and the third preset range.

In this embodiment of this application, the attribute prediction information for the K to-be-coded points may also be determined based on other manners. Optionally, before the step 302, the following is included:

obtaining T neighboring points of a reference point by using the 1st point of the K to-be-coded points as the reference point;
obtaining R neighboring points with a closest Manhattan distance to the reference point in the T neighboring points;
obtaining L neighboring points, with a closest Manhattan distance to a target to-be-coded point of the K to-be-coded points, in the R neighboring points, where the target to-be-coded point is any one of the K to-be-coded points;
determining initial attribute prediction information for the target to-be-coded point based on the L neighboring points; and
determining attribute prediction information for the target to-be-coded point based on a first weight corresponding to the target to-be-coded point and the initial attribute prediction information; where T, R, and L are all positive integers.

In this implementation, the K to-be-coded points may be arranged in a specific order. For example, in a case that the to-be-coded point cloud is sorted according to a Morton code, the K to-be-coded points may be sorted based on a corresponding Morton code size, and the 1st point of the K to-be-coded points may be a point with the smallest Morton code or a point with the largest Morton code. Further, using the 1st point as a reference point, T neighboring points of the reference point are selected, and then R neighboring points, with a closest Manhattan distance to the reference point, in the T neighboring points are selected. For each to-be-coded point in the K to-be-coded points, L neighboring points with a closest Manhattan distance in the R neighboring points are selected, and corresponding initial attribute prediction information for each of the to-be-coded points is determined based on its respective corresponding L neighboring points. Further, the attribute prediction information for each of the to-be-coded points is determined based on a first weight and initial attribute prediction information that are corresponding to each of the to-be-coded points. In this way, the attribute prediction information for the K to-be-coded points can be obtained through calculation.

In this implementation, a sum of the first weights respectively corresponding to the K to-be-coded points is 1.

The determining initial attribute prediction information for the target to-be-coded point based on the L neighboring points includes:

determining the initial attribute prediction information for the target to-be-coded point based on each neighboring point in the L neighboring points and a corresponding second weight, where the second weight is a reciprocal of a Manhattan distance between the target to-be-coded point and the neighboring point.

It can be understood that each of the L neighboring points of the target to-be-coded point has a different Manhattan distance to the target to-be-coded point, and the second weight is a reciprocal of a Manhattan distance between the current neighboring point and the target to-be-coded point. In this case, the second weight corresponding to each of the neighboring points is different. Optionally, the initial attribute prediction information for the target to-be-coded point may be a sum of products of the attribute information of neighboring points in the L neighboring points and corresponding second weights, so as to obtain the initial attribute prediction information for the target to-be-coded point through calculation.

In this embodiment of this application, after the attribute prediction information for the K to-be-coded points is determined based on the foregoing manner, it may be determined, based on the attribute prediction information for the K to-be-coded points, whether to perform DCT transform on the K to-be-coded points. In this case, the first information includes the K to-be-coded points and the second information includes the attribute prediction information for the K to-be-coded points. Then, the step 302 may include:

obtaining a maximum attribute prediction value and a minimum attribute prediction value in the attribute prediction information corresponding to the K to-be-coded points, and in a case that an absolute difference between the maximum attribute prediction value and the minimum attribute prediction value is less than a first threshold, determining to perform DCT transform on the K to-be-coded points; or

in a case that an absolute ratio of the maximum attribute prediction value to the minimum attribute prediction value is less than a second threshold, determining to perform DCT transform on the K to-be-coded points.

For example, the attribute prediction information for the K to-be-coded points is denoted as $AttrPre_i$, with a value $i$ ranging from 1 to K. The maximum attribute prediction value and the minimum attribute prediction value in the attribute prediction information corresponding to the K to-be-coded points are obtained and denoted as $AttrPre_{max}$ and $AttrPre_{min}$, respectively. The first threshold is denoted as $Threshold1$, and if $|AttrPre_{max} - AttrPre_{min}| \geq Threshold1$, no DCT transform is performed on the K to-be-coded points, or if $|AttrPre_{max} - AttrPre_{min}| < Threshold1$, DCT transform is performed on the K to-be-coded points.

Alternatively, the maximum attribute prediction value and the minimum attribute prediction value in the attribute prediction information corresponding to the K to-be-coded points are obtained and denoted as $AttrPre_{max}$ and $AttrPre_{min}$, respectively. The second threshold is denoted as $Threshold2$, and if $\dfrac{|AttrPre_{max}|}{|AttrPre_{min}|} \geq Threshold2$, no DCT transform is performed on the K to-be-coded points, or if $\dfrac{|AttrPre_{max}|}{|AttrPre_{min}|} < Threshold2$, DCT transform is performed on the K to-be-coded points.

In this embodiment of this application, the first information may alternatively include N coded points prior to the K to-be-coded points, and the second information includes attribute reconstruction information for the N coded points. In this case, the step 302 includes:

obtaining a maximum attribute reconstruction value and a minimum attribute reconstruction value in the attribute reconstruction information corresponding to the N coded points, and in a case that an absolute difference between the maximum attribute reconstruction value and the minimum attribute reconstruction value is less than a third threshold, determining to perform DCT transform on the K to-be-coded points; or

in a case that an absolute ratio of the maximum attribute reconstruction value to the minimum attribute reconstruction value is less than a fourth threshold, determining to perform DCT transform on the K to-be-coded points.

N is an integer greater than 1, that is, at least two coded points prior to the K to-be-coded points need to be obtained. It can be understood that attribute reconstruction information for the coded points can be learned. The attribute reconstruction information is attribute information to be given to a point cloud sequence. However, the attribute reconstruction information is different from the original attribute information in the original point cloud, and the attribute reconstruction information is obtained by the attribute prediction information plus the attribute residual information of the point cloud after the encoding end undergoes the coding process.

In this implementation, it is assumed that the attribute reconstruction information for the N to-be-coded points is denoted as $AttrRec_i$, with a value $i$ ranging from 1 to N. The maximum attribute reconstruction value and the minimum attribute reconstruction value in the attribute reconstruction information corresponding to the N to-be-coded points are obtained and denoted as $AttrRec_{max}$ and $AttrRec_{min}$, respectively. The third threshold is denoted as $Threshold3$, and if $|AttrRec_{max} - AttrRec_{min}| \geq Threshold3$, no DCT transform is performed on the K to-be-coded points, or if $|AttrRec_{max} - AttrRec_{min}| < Threshold3$, DCT transform is performed on the K to-be-coded points.

Alternatively, the maximum attribute reconstruction value and the minimum attribute reconstruction value in the attribute reconstruction information corresponding to the N to-be-coded points are obtained and denoted as $AttrRec_{max}$ and $AttrRec_{min}$, respectively. The fourth threshold is denoted as $Threshold4$, and if $\dfrac{|AttrRec_{max}|}{|AttrRec_{min}|} \geq Threshold4$, no DCT transform is performed on the K to-be-coded points, or if $\dfrac{|AttrRec_{max}|}{|AttrRec_{min}|} < Threshold4$, DCT transform is performed on the K to-be-coded points.

Step 303: In a case that it is determined to perform DCT transform on the K to-be-coded points, perform DCT transform on the K to-be-coded points to obtain a transform coefficient of the K to-be-coded points.

In this embodiment of this application, if it is determined to perform DCT transform on the K to-be-coded points, DCT transform may be performed on the attribute residual information of the K to-be-coded points. Further, before the performing DCT transform on the K to-be-coded points, the method further includes:

obtaining attribute residual information for the K to-be-coded points based on attribute prediction information for the K to-be-coded points.

The attribute residual information for each to-be-coded point in the K to-be-coded points may be a difference between the original attribute information and the attribute prediction information for the to-be-coded point.

Further, the performing DCT transform on K to-be-coded points to obtain a transform coefficient of the K to-be-coded points includes:

performing DCT transform on the attribute residual information for the K to-be-coded points to obtain the transform coefficient corresponding to the K to-be-coded points.

For example, the attribute residual information for the K to-be-coded points is denoted as *AttrRes,* and DCT transform is performed on the attribute residual information of the K points, where K indicates the order of DCT transform. Assuming that T is a K-order transformation matrix, the transform coefficient can be obtained according to the following transform equation:

$$\begin{bmatrix} DC \\ AC_0 \\ ... \\ AC_{K-2} \end{bmatrix} = T \begin{bmatrix} AttrRes_{n+1} \\ AttrRes_{n+2} \\ ... \\ AttrRes_{n+K} \end{bmatrix},$$

where

$AttrRes_i$ indicates attribute residual information, $i = n, n + 1, \cdots, n + K - 1$, DC indicates a low-frequency coefficient obtained after DCT transform, and AC indicates a high-frequency coefficient obtained after DCT transform. In this way, the transform coefficient of the K to-be-coded points after DCT transform is obtained.

Step 304: Quantize the transform coefficient of the K to-be-coded points and perform entropy coding based on a quantized transform coefficient, to generate a binary bit stream.

Specifically, after the transform coefficient of the K to-be-coded points is obtained, the transform coefficient is quantized to obtain a quantized transform coefficient, and then entropy coding is performed on the quantized transform coefficient to generate a binary bit stream, thereby implementing encoding of the attribute information of the to-be-coded point cloud.

In this embodiment of this application, in the process of encoding the to-be-coded point cloud, it is necessary to determine, based on the attribute prediction information for the to-be-coded points or the attribute reconstruction information for the coded points, whether to perform DCT transform on the to-be-coded points. In a case that it is determined to perform DCT transform on the to-be-coded points, DCT transform is performed on the to-be-coded points, so as to convert a dispersed distribution of the attribute information in the spatial domain to a relatively centralized distribution in the transform domain. In this way, signal energy is concentrated in a few coefficients, facilitating quantization and coding. This removes attribute redundancy, thereby improving the attribute coding efficiency and reconstruction performance.

The transform coefficient includes a low-frequency coefficient and a high-frequency coefficient, and the quantizing the transform coefficient of the K to-be-coded points and performing entropy coding based on a quantized transform coefficient includes:

quantizing a high frequency coefficient and low-frequency coefficient corresponding to the K to-be-coded points, and performing entropy coding on the quantized high frequency coefficient and low-frequency coefficient to obtain a first coded value and a second coded value respectively.

Optionally, after the quantizing the transform coefficient of the K to-be-coded points and performing entropy coding based on a quantized transform coefficient, the method further includes:

performing inverse quantization on the quantized transform coefficient, and performing inverse transform on an inverse transform coefficient obtained after inverse quantization, so as to obtain attribute reconstruction information for the K to-be-coded points.

In this embodiment of this application, after quantization and entropy coding of the transform coefficient of the K to-be-coded points, inverse quantization and inverse DCT transform may be further performed based on the quantized transform coefficient to obtain the attribute reconstruction information for the K to-be-coded points.

After entropy coding is performed on the quantized high frequency coefficient and low-frequency coefficient to obtain the first coded value and the second coded value respectively, the performing inverse quantization on the quantized transform coefficient, and performing inverse transform on an inverse transform coefficient obtained after inverse quantization, so as to obtain attribute reconstruction information for the K to-be-coded points includes:

performing inverse quantization on the first coded value and the second coded value to obtain an inverse high-frequency coefficient and inverse low-frequency coefficient after inverse quantization;

performing inverse DCT transform based on the inverse high-frequency coefficient and the inverse low-frequency coefficient to obtain inverse attribute residual information corresponding to the K to-be-coded points; and

obtaining attribute reconstruction information for the K to-be-coded points based on the attribute prediction information and the inverse attribute residual information for the K to-be-coded points.

Specifically, entropy coding is performed on the quantized high-frequency coefficient and low-frequency coefficient separately, inverse quantization is performed on coded values obtained after entropy coding to obtain an inverse-quantized inverse high-frequency coefficient and inverse low-frequency coefficient, and inverse DCT transform is performed on the inverse high-frequency coefficient and inverse low-frequency coefficient to obtain the inverse attribute residual information for the K to-be-coded points. It should be noted that during the encoding process, DCT transform needs to be performed on the attribute residual information for the K to-be-coded points, and then quantization, inverse quantization, and inverse transform are performed. During the process, the attribute residual information may be lost, and therefore the inverse attribute residual information obtained may be inconsistent with the attribute residual information for the K to-be-coded points before DCT transform.

Further, based on the inverse attribute residual information and the attribute prediction information for the K to-be-coded points, the attribute reconstruction information for the K to-be-coded points can be obtained. The attribute reconstruction information may be a sum of the attribute prediction information and the inverse attribute residual information.

In this embodiment of this application, the quantizing a high frequency coefficient and low-frequency coefficient corresponding to the K to-be-coded points includes:

obtaining a high-frequency coefficient quantization step corresponding to the high frequency coefficient, and obtaining a low-frequency coefficient quantization step corresponding to the low-frequency coefficient; and

quantizing the high frequency coefficient based on the high frequency coefficient and the high frequency coefficient quantization step, and quantizing the low-frequency coefficient based on the low-frequency coefficient and the low-frequency coefficient quantization step.

In the process of quantizing the transform coefficient, the quantization step may have a specific offset, and proportional scaling operation of integer DCT needs to be performed based on the offset of the quantization step, that is, the quantization step of the transform coefficient for quantization is a quantization step obtained after the proportional scaling operation, so as to ensure accuracy of a quantization result and avoid quantization errors caused by the offset of the quantization step.

Optionally, the obtaining a high-frequency coefficient quantization step corresponding to the high frequency coefficient, and obtaining a low-frequency coefficient quantization step corresponding to the low-frequency coefficient includes:

obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-coded points.

In a case that distribution of the components corresponding to the attribute information of the K to-be-encoded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and

in a case that distribution of the components corresponding to the attribute information for the K to-be-coded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

For example, in a case that distribution of the components corresponding to the attribute information is flat, a coarser quantization manner is used. In this case, $Q_{fin-AC} = Q_{ori} + Offset_{coeff} + Offset_{AC}$ and $Q_{fin-DC} = Q_{ori} + Offset_{coeff} + Offset_{DC}$. $Q_{fin-AC}$ indicates a quantization step of the high frequency coefficient, $Q_{ori}$ indicates an original quantization step, $Offset_{coeff}$ indicates a preset quantization step offset, $Offset_{AC}$ indicates a high-frequency coefficient quantization step offset, $Q_{fin-DC}$ indicates a low-frequency coefficient quantization step, and $Offset_{DC}$ indicates a low-frequency coefficient quantization step offset.

In a case that distribution of the components corresponding to the attribute information is not flat, a same quantization step is applied to the high-frequency coefficient and the low-frequency coefficient during quantization, where $Q_{fin} = Q_{ori} + Offset_{coeff} + Offset_{DC}$, where $Q_{fin}$ indicates a quantization step for the low-frequency coefficient and also indicates a quantization step for the high-frequency coefficient, $Q_{ori}$ indicates an original quantization step, $Offset_{coeff}$ indicates a preset quantization step offset, and $Offset_{DC}$ indicates a low-frequency coefficient quantization step offset.

In addition, a value obtained after quantization of the high frequency coefficient is 0 in a case the high frequency coefficient is less than a first preset threshold, and a value obtained after quantization of the low-frequency coefficient is 0 in a case the low-frequency coefficient is less than a second preset threshold. The first preset threshold and the second preset threshold may be the same or different.

In this embodiment of this application, a coding manner in which no DCT transform is performed on the K to-be-coded points may alternatively be included. Optionally, the method further includes:

in a case that it is determined not to perform DCT transform on the K to-be-coded points, quantizing the attribute residual information for the K to-be-coded points; and
performing entropy coding on the quantized attribute residual information for the K to-be-coded points to generate a binary bit stream.

That is, if it is determined, based on the attribute prediction information for the K to-be-coded points, not to perform DCT transform on the K to-be-coded points, or if it is determined, based on the N coded points, not to perform DCT transform on the K to-be-coded points, the attribute residual information for the K to-be-coded points may be directly quantized, and then entropy coding is performed based on the quantized attribute residual information to generate a binary bit stream, so as to complete encoding of the to-be-coded point cloud.

Further, after the performing entropy coding on the quantized attribute residual information for the K to-be-coded points, the method may further include:

performing inverse quantization on a coded value obtained after the entropy coding to obtain inverse attribute residual information after inverse quantization of the K to-be-coded points; and
obtaining attribute reconstruction information for the K to-be-coded points based on the attribute prediction information and the inverse attribute residual information for the K to-be-coded points.

That is, for the K to-be-coded points that do not require DCT transform, after quantization is performed on the attribute residual information of the K to-be-coded points and entropy coding is performed based on the quantized attribute residual information, inverse quantization may also be performed on the coded value obtained after entropy coding to obtain inverse attribute residual information, and then, based on the sum of the inverse attribute residual information and the attribute prediction information for the K to-be-coded points, the attribute reconstruction information for the K points is obtained.

Optionally, in this embodiment of this application, before the obtaining first information, the method further includes:

obtaining identification information, where the identification information is used to indicate whether to perform the method; and
determining, based on the identification information, whether to perform the method.

The identification information may be identification information obtained based on user input, for example, may be one parameter input by the user or may be a pre-stored parameter at the encoding end. The pre-stored parameter is obtained through user operation, and the parameter is used to indicate whether the encoding end performs the point cloud attribute information encoding method.

For example, the identification information may be denoted by 0 and 1. If the identification information is 0, indicating that the point cloud attribute information encoding method does not need to be performed, the encoding end does not perform the point cloud attribute information encoding method; or if the identification information is 1, the encoding end performs the point cloud attribute information encoding method. Optionally, the identification information may be denoted in other forms, for example, if the identification information is "true", the encoding end performs the point cloud attribute information encoding method; or if the identification information is "false", the encoding end does not perform the point cloud attribute information encoding method. Certainly, the identification information may alternatively be denoted in other forms, and no more examples are provided in this embodiment of this application.

Further, after the generating a binary bit stream, the method further includes:
writing the identification information into the binary bit stream.

It can be understood that after the binary bit stream is generated at the encoding end, the encoding end writes the identification information into the binary bit stream, so that after obtaining the binary bit stream, the decoding end can obtain the identification information by decoding the binary bit stream. In other words, based on the identification information, it can be learned whether the encoding end performs encoding by using the point cloud attribute information encoding method, so that the decoding end can use a corresponding decoding method based on the identification information, ensuring smooth decoding at the decoding end and guaranteeing decoding efficiency.

In this embodiment of this application, inverse quantization is performed on coded values obtained after entropy coding to obtain the attribute reconstruction information for the K to-be-coded points, or for the K to-be-coded points after DCT transform, inverse quantization and inverse DCT transform are sequentially performed on the coded values obtained after entropy coding, so as to obtain the attribute reconstruction information for the K to-be-coded points. Based on the obtained attribute reconstruction information, it is determined whether uncoded points in the to-be-coded point cloud need to be DCT-transformed, so as to convert a dispersed distribution of the attribute information in the spatial domain to a centralized distribution in the transform domain, thereby achieving the purpose of removing spatial redundancy and improving attribute encoding efficiency and reconstruction performance.

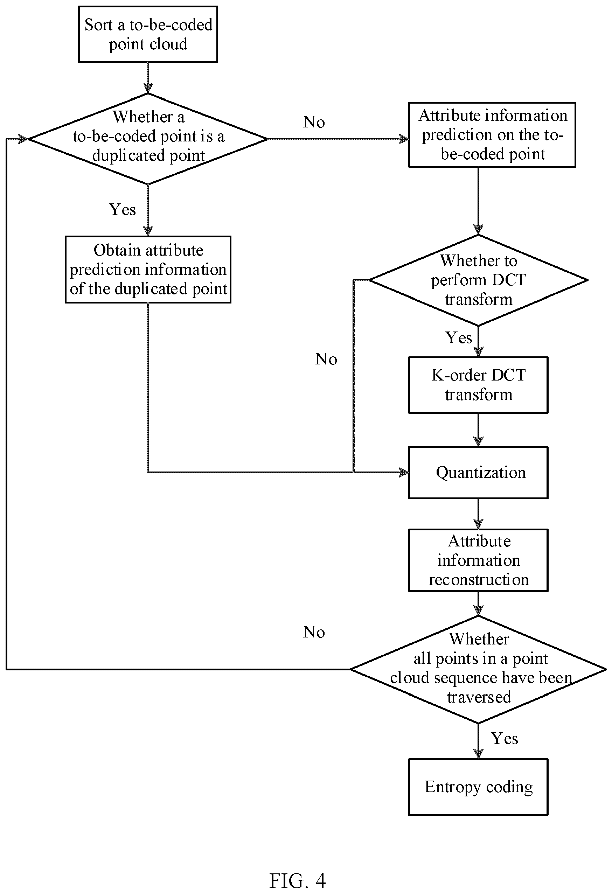

Referring to FIG. 4, FIG. 4 is a flowchart of another point cloud attribute encoding method according to an embodiment of this application. As shown in FIG. 4, the procedure of the method is as follows: first sort the to-be-coded point cloud, where sorting is performed based on a Morton code or based on a Hilbert code; for the sorted to-be-coded points, determine whether the to-be-coded point is a duplicated point, that is, determine whether the to-be-coded point is duplicated with the coded point; if yes, obtain attribute prediction information for the duplicated point and perform quantization based on the attribute prediction information, or if the to-be-coded point is not a duplicated point, perform attribute information prediction on the to-be-coded point to obtain the attribute prediction information, and determine, based on the attribute prediction information for the to-be-coded point, whether DCT transform needs to be performed; if yes, perform K-order DCT transform on the to-be-coded point to obtain a transform coefficient and quantize the transform coefficient; if DCT transformation does not need to be performed, directly quantize the attribute residual information of the to-be-coded point; perform attribute information reconstruction based on quantized related information to obtain attribute reconstruction information; determine, based on the attribute reconstruction information, whether DCT transform needs to be performed on subsequent uncoded points; furthermore, determine whether all points in the uncoded-point cloud sequence have been traversed; if yes, perform entropy coding on the quantized related information, or if not, continue to determine whether the uncoded point is a duplicated point until quantization and entropy coding on all points in the uncoded point cloud are completed. It should be noted that for the related concepts and specific implementation manners involved in this embodiment, reference may be made to the description in the embodiment shown in FIG. 3 above, and details will not be repeated herein.

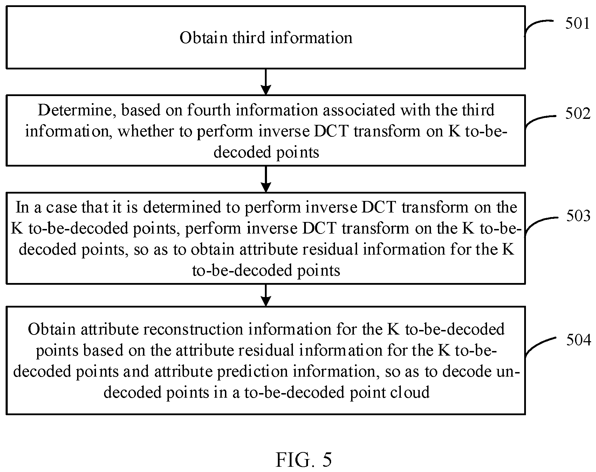

Referring to FIG. 5, FIG. 5 is a flowchart of a point cloud attribute information decoding method according to an embodiment of this application. The method may be applied to a terminal such as a mobile phone, a tablet computer, or a computer. As shown in FIG. 5, the method includes the following steps.

Step 501: Obtain third information.

Step 502: Determine, based on fourth information associated with the third information, whether to perform inverse DCT transform on K to-be-decoded points.

Step 503: In a case that it is determined to perform inverse DCT transform on the K to-be-decoded points, perform inverse DCT transform on the K to-be-decoded points, so as to obtain attribute residual information for the K to-be-decoded points.

Step 504: Obtain attribute reconstruction information for the K to-be-decoded points based on the attribute residual information and attribute prediction information that are for the K to-be-decoded points, so as to decode undecoded points in a to-be-decoded point cloud.

The third information includes the K to-be-decoded points and the fourth information includes attribute prediction information for the K to-be-decoded points; or the third information includes N decoded points prior to the K to-be-decoded points, and the fourth information includes attribute reconstruction information for the N decoded points, K being a positive integer and N being an integer greater than 1.

Optionally, the third information includes the K to-be-decoded points and the fourth information includes the attribute prediction information for the K to-be-decoded points. In this case, the step 502 includes:

obtaining a maximum attribute prediction value and a minimum attribute prediction value in the attribute prediction information corresponding to the K to-be-decoded points, and in a case that an absolute difference between the maximum attribute prediction value and the minimum attribute prediction value is less than a first threshold, determining to perform inverse DCT transform on the K to-be-decoded points; or

in a case that an absolute ratio of the maximum attribute prediction value to the minimum attribute prediction value is less than a second threshold, determining to perform inverse DCT transform on the K to-be-decoded points.

Optionally, the third information includes N decoded points prior to the K to-be-decoded points, and the fourth information includes the attribute reconstruction information for the N decoded points. In this case, the step 502 includes:

obtaining a maximum attribute reconstruction value and a minimum attribute reconstruction value in the attribute reconstruction information corresponding to the N decoded points, and in a case that an absolute difference between the maximum attribute reconstruction value and the minimum attribute reconstruction value is less than a third threshold, determining to perform inverse DCT transform on the K to-be-decoded points; or
in a case that an absolute ratio of the maximum attribute reconstruction value to the minimum attribute reconstruction value is less than a fourth threshold, determining to perform inverse DCT transform on the K to-be-decoded points.

Optionally, the third information includes K to-be-decoded points, and the step 501 includes:
performing sorting on a to-be-decoded point cloud and obtaining K to-be-decoded points in the sorted to-be-decoded point cloud.

Optionally, the performing sorting on a to-be-decoded point cloud and obtaining K to-be-decoded points in the sorted to-be-decoded point cloud includes:

calculating a Hilbert code corresponding to each point in the to-be-decoded point cloud, performing sorting on the to-be-decoded point cloud based on the Hilbert codes, and sequentially selecting the K to-be-decoded points in the sorted to-be-decoded point cloud; or
calculating a Morton code corresponding to each point in the to-be-decoded point cloud, performing sorting on the to-be-decoded point cloud based on the Morton codes, and sequentially selecting the K to-be-decoded points in the sorted to-be-decoded point cloud.

Optionally, before the step 502, the method further includes:

obtaining S neighboring points with a closest Manhattan distance to a target to-be-decoded point according to a bi-Hilbert order or a bi-Morton order, where the target to-be-decoded point is any one of the K to-be-decoded points;
determining initial attribute prediction information for the target to-be-decoded point based on the S neighboring points; and
determining attribute prediction information for the target to-be-decoded point based on a first weight corresponding to the target to-be-decoded point and the initial attribute prediction information.

Optionally, the obtaining S neighboring points with a closest Manhattan distance to a target to-be-decoded point according to a bi-Hilbert order or a bi-Morton order includes:

in a given preset search range, obtaining the preceding-order M points of the target to-be-decoded point according to a Hilbert-1 order, obtaining the preceding-order N1 points and post-order N2 points of the target to-be-decoded point according to a Hilbert-2 order, and obtaining the S neighboring points with the closest Manhattan distance to the target to-be-decoded point within a target range determined based on M, N1, and N2; or
in the given preset search range, obtaining the preceding-order M points of the target to-be-decoded point according to a Morton-1 order, obtaining the preceding-order N1 points and post-order N2 points of the target to-be-decoded point according to a Morton-2 order, and obtaining the S neighboring points with the closest Manhattan distance to the target to-be-decoded point within a target range determined based on M, N1, and N2; where
M, N1, and N2 are all positive integers.

Optionally, a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range;

the binary bit stream includes a first attribute parameter and a second attribute parameter, where the first attribute parameter is used to represent the first preset range and the second attribute parameter is used to represent the second preset range; and
in a case that the post-order search range of the Hilbert-2 order or Morton-2 order is the third preset range, the binary bit stream further includes a third attribute parameter, where the third attribute parameter is used to represent the third preset range.

Optionally, the given preset search range is determined based on a correlation between an initial number of points of a point cloud sequence and a bounding box volume of an input point cloud.
Optionally, the determining initial attribute prediction information for the target to-be-decoded point based on the S neighboring points includes:
determining the initial attribute prediction information for the target to-be-decoded point based on each neighboring point in the S neighboring points and a corresponding second weight, where the second weight is a reciprocal of a Manhattan distance between the target to-be-decoded point and the neighboring point.
Optionally, the third information includes the K to-be-decoded points, and before the step 502, the method further includes:

obtaining T neighboring points of a reference point by using the 1st point of the K to-be-decoded points as the reference point;
obtaining R neighboring points with a closest Manhattan distance to the reference point in the T neighboring points;
obtaining L neighboring points, with a closest Manhattan distance to a target to-be-decoded point of the K to-be-decoded points, in the R neighboring points, where the target to-be-decoded point is any one of the K to-be-decoded points;
determining initial attribute prediction information for the target to-be-decoded point based on the L neighboring points; and
determining attribute prediction information for the target to-be-decoded point based on a first weight corresponding to the target to-be-decoded point and the initial attribute prediction information; where
T, R, and L are all positive integers.

Optionally, the determining initial attribute prediction information for the target to-be-decoded point based on the L neighboring points includes:
determining the initial attribute prediction information for the target to-be-decoded point based on each neighboring point in the L neighboring points and a corresponding second weight, where the second weight is a reciprocal of a Manhattan distance between the target to-be-decoded point and the neighboring point.

Optionally, a sum of the first weights respectively corresponding to the K to-be-decoded points is 1.

Optionally, before the performing inverse DCT transform on K to-be-decoded points, the method further includes:

obtaining a transform coefficient of the K to-be-decoded points; and
performing inverse quantization on the transform coefficient to obtain an inverse-quantized transform coefficient.

The performing inverse DCT transform on K to-be-decoded points includes:
performing inverse DCT transform on the K to-be-decoded points based on the inverse-quantized transform coefficient.

Optionally, the transform coefficient includes a high-frequency coefficient and a low-frequency coefficient, and the performing inverse quantization on the transform coefficient to obtain an inverse-quantized transform coefficient includes:

obtaining a high-frequency coefficient quantization step corresponding to the high frequency coefficient, and obtaining a low-frequency coefficient quantization step corresponding to the low-frequency coefficient; and
performing inverse quantization on the high frequency coefficient based on the high frequency coefficient and the high frequency coefficient quantization step, and performing inverse quantization on the low-frequency coefficient based on the low-frequency coefficient and the low-frequency coefficient quantization step.

Optionally, the obtaining a high-frequency coefficient quantization step corresponding to the high frequency coefficient, and obtaining a low-frequency coefficient quantization step corresponding to the low-frequency coefficient includes:
obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-decoded points.

Optionally, the obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-decoded points includes:

in a case that distribution of the components corresponding to the attribute information for the K to-be-decoded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and
in a case that distribution of the components corresponding to the attribute information for the K to-be-decoded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

Optionally, a value obtained after quantization of the high frequency coefficient is 0 in a case the high frequency coefficient is less than a first preset threshold, and a value obtained after quantization of the low-frequency coefficient is 0 in a case the low-frequency coefficient is less than a second preset threshold.

Optionally, the method further includes:

in a case that it is determined not to perform inverse DCT transform on the K to-be-decoded points, quantizing the transform coefficient of the K to-be-decoded points, so as to obtain the attribute residual information for the K to-be-decoded points.

Optionally, before the step of obtaining third information, the method further includes:

obtaining identification information from a binary bit stream, where the identification information is used to indicate whether to perform the method; and
determining, based on the identification information, whether to perform the method.

It should be noted that the decoding method provided in this embodiment corresponds to the encoding method in the embodiment described in FIG. 3 above. For related concepts and specific implementations involved in this embodiment, reference may be made to the description of the encoding method described in FIG. 3 above, which is not repeated in this embodiment.

In the decoding method in this embodiment of this application, in the process of decoding the to-be-decoded point cloud, it is necessary to determine, based on the attribute prediction information for the to-be-decoded points or the attribute reconstruction information for the decoded points, whether to perform DCT transform on the to-be-decoded points. In a case that it is determined to perform DCT transform on the to-be-decoded points, DCT transform is performed on the to-be-decoded points, so as to convert a dispersed distribution of the attribute information in the spatial domain to a relatively centralized distribution in the transform domain. In this way, signal energy is concentrated in a few coefficients, facilitating quantization and decoding. This removes attribute redundancy, thereby improving the attribute decoding efficiency and reconstruction performance.

It should be noted that, for the point cloud attribute information encoding method provided in the embodiments of this application, the execution body may be a point cloud attribute information encoding apparatus, or a control module for executing the point cloud attribute information encoding method in the point cloud attribute information encoding apparatus. In the embodiments of this application, the point cloud attribute information encoding method being performed by the point cloud attribute information encoding apparatus is used as an example to describe the point cloud attribute information encoding apparatus provided in the embodiments of this application.

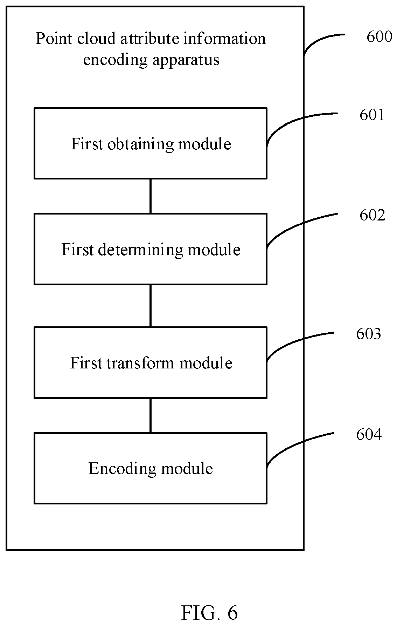

Referring to FIG. 6, FIG. 6 is a structural diagram of a point cloud attribute information encoding apparatus according to an embodiment of this application. As shown in FIG. 6, the point cloud attribute information encoding apparatus 600 includes:

a first obtaining module 601, configured to obtain first information;
a first determining module 602, configured to determine, based on second information associated with the first information, whether to perform discrete cosine transform DCT transform on K to-be-coded points;
a first transform module 603, configured to: in a case that it is determined to perform DCT transform on the K to-be-coded points, perform DCT transform on the K to-be-coded points to obtain a transform coefficient of the K to-be-coded points; and
an encoding module 604, configured to quantize the transform coefficient of the K to-be-coded points and perform entropy coding based on a quantized transform coefficient, to generate a binary bit stream; where
the first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is an integer greater than 1.

Optionally, the first information includes the K to-be-coded points and the second information includes attribute prediction information for the K to-be-coded points.

The first determining module 602 is further configured to:

obtain a maximum attribute prediction value and a minimum attribute prediction value in the attribute prediction information corresponding to the K to-be-coded points, and in a case that an absolute difference between the maximum attribute prediction value and the minimum attribute prediction value is less than a first threshold, determine to perform DCT transform on the K to-be-coded points; or
in a case that an absolute ratio of the maximum attribute prediction value to the minimum attribute prediction value is less than a second threshold, determine to perform DCT transform on the K to-be-coded points.

Optionally, the first information includes N coded points prior to the K to-be-coded points and the second information includes attribute reconstruction information for the N coded points.

The first determining module 602 is further configured to:

obtain a maximum attribute reconstruction value and a minimum attribute reconstruction value in the attribute reconstruction information corresponding to the N coded points, and in a case that an absolute difference between the maximum attribute reconstruction value and the minimum attribute reconstruction value is less than a third threshold, determine to perform DCT transform on the K to-be-coded points; or

in a case that an absolute ratio of the maximum attribute reconstruction value to the minimum attribute reconstruction value is less than a fourth threshold, determine to perform DCT transform on the K to-be-coded points.

Optionally, the first information includes the K to-be-coded points, and the first obtaining module 601 is further configured to:

perform sorting on points of a to-be-coded point cloud and obtain K to-be-coded points in the sorted to-be-coded point cloud.

Optionally, the first obtaining module 601 is further configured to:

calculate a Hilbert code corresponding to each point in the to-be-coded point cloud, perform sorting on the points of the to-be-coded point cloud based on the Hilbert codes, and sequentially select the K to-be-coded points in the sorted to-be-coded point cloud; or

calculate a Morton code corresponding to each point in the to-be-coded point cloud, perform sorting on the points of the to-be-coded point cloud based on the Morton codes, and sequentially select the K to-be-coded points in the sorted to-be-coded point cloud.

Optionally, the apparatus further includes an attribute information prediction module configured to:

obtain S neighboring points with a closest Manhattan distance to a target to-be-coded point according to a bi-Hilbert order or a bi-Morton order, where the target to-be-coded point is any one of the K to-be-coded points;

determine initial attribute prediction information for the target to-be-coded point based on the S neighboring points; and

determine attribute prediction information for the target to-be-coded point based on a first weight corresponding to the target to-be-coded point and the initial attribute prediction information.

Optionally, the attribute information prediction module is further configured to:

in a given preset search range, obtain the preceding-order M points of the target to-be-coded point according to a Hilbert-1 order, obtain the preceding-order N1 points and post-order N2 points of the target to-be-coded point according to a Hilbert-2 order, and obtain the S neighboring points with the closest Manhattan distance to the target to-be-coded point within a target range determined based on M, N1, and N2; or

in the given preset search range, obtain the preceding-order M points of the target to-be-coded point according to a Morton-1 order, obtain the preceding-order N1 points and post-order N2 points of the target to-be-coded point according to a Morton-2 order, and obtain the S neighboring points with the closest Manhattan distance to the target to-be-coded point within a target range determined based on M, N1, and N2; where

M, N1, and N2 are all positive integers.

Optionally, a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range or the second preset range.

The binary bit stream includes a first attribute parameter and a second attribute parameter, where the first attribute parameter is used to represent the first preset range and the second attribute parameter is used to represent the second preset range; and

in a case that the post-order search range of the Hilbert-2 order or Morton-2 order is the third preset range, the binary bit stream further includes a third attribute parameter, where the third attribute parameter is used to represent the third preset range.

Optionally, the given preset search range is determined based on a correlation between an initial number of points of a point cloud sequence and a bounding box volume of an input point cloud.

Optionally, the attribute information prediction module is further configured to:

determine the initial attribute prediction information for the target to-be-coded point based on each neighboring point in the S neighboring points and a corresponding second weight, where the second weight is a reciprocal of a Manhattan distance between the target to-be-coded point and the neighboring point.

Optionally, the first information includes the K to-be-coded points, and the attribute information prediction module is further configured to:

obtain T neighboring points of a reference point by using the 1 st point of the K to-be-coded points as the reference point;

obtain R neighboring points with a closest Manhattan distance to the reference point in the T neighboring points;

obtain L neighboring points, with a closest Manhattan distance to a target to-be-coded point of the K to-be-coded points, in the R neighboring points, where the target to-be-coded point is any one of the K to-be-coded points;

determine initial attribute prediction information for the target to-be-coded point based on the L neighboring points; and

determine attribute prediction information for the target to-be-coded point based on a first weight corresponding to the target to-be-coded point and the initial attribute prediction information; where

T, R, and L are all positive integers.

Optionally, the attribute information prediction module is further configured to:

determine the initial attribute prediction information for the target to-be-coded point based on each neighboring point in the L neighboring points and a corresponding second weight, where the second weight is a reciprocal of a Manhattan distance between the target to-be-coded point and the neighboring point.

Optionally, a sum of the first weights respectively corresponding to the K to-be-coded points is 1.

Optionally, the apparatus further includes a third obtaining module configured to:

obtain attribute residual information for the K to-be-coded points based on attribute prediction information for the K to-be-coded points; and

The first transform module 603 is further configured to:

perform DCT transform on the attribute residual information for the K to-be-coded points to obtain the transform coefficient corresponding to the K to-be-coded points.

Optionally, the apparatus further includes an attribute reconstruction module configured to:

perform inverse quantization on the quantized transform coefficient, and perform inverse transform on an inverse transform coefficient obtained after inverse quantization, so as to obtain attribute reconstruction information for the K to-be-coded points.

Optionally, the transform coefficient includes a low-frequency coefficient and a high-frequency coefficient, and the encoding module 604 is further configured to:

quantize a high frequency coefficient and low-frequency coefficient corresponding to the K to-be-coded points, and perform entropy coding on the quantized high frequency coefficient and low-frequency coefficient to obtain a first coded value and a second coded value respectively.

The attribute reconstruction module is further configured to:

perform inverse quantization on the first coded value and the second coded value to obtain an inverse high-frequency coefficient and inverse low-frequency coefficient after inverse quantization;

perform Inverse DCT transform based on the inverse high-frequency coefficient and the inverse low-frequency coefficient to obtain inverse attribute residual information corresponding to the K to-be-coded points; and

obtain attribute reconstruction information for the K to-be-coded points based on the attribute prediction information and the inverse attribute residual information for the K to-be-coded points.

Optionally, the encoding module 604 is further configured to:

obtain a high-frequency coefficient quantization step corresponding to the high frequency coefficient, and obtain a low-frequency coefficient quantization step corresponding to the low-frequency coefficient; and

quantize the high frequency coefficient based on the high frequency coefficient and the high frequency coefficient quantization step, and quantize the low-frequency coefficient based on the low-frequency coefficient and the low-frequency coefficient quantization step.

Optionally, the encoding module 604 is further configured to:

obtain the high-frequency coefficient quantization step corresponding to the high-frequency coefficient, and obtain a low-frequency coefficient quantization step corresponding to the low-frequency coefficient, based on a distribution status of components corresponding to attribute information for the K to-be-coded points.

Optionally, the encoding module 604 is further configured to:

in a case that distribution of the components corresponding to the attribute information for the K to-be-coded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and

in a case that distribution of the components corresponding to the attribute information for the K to-be-coded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

Optionally, a value obtained after quantization of the high frequency coefficient is 0 in a case the high frequency coefficient is less than a first preset threshold, and a value obtained after quantization of the low-frequency coefficient is 0 in a case the low-frequency coefficient is less than a second preset threshold.

Optionally, the encoding module 604 is further configured to:

in a case that it is determined not to perform DCT transform on the K to-be-coded points, quantize the attribute residual information for the K to-be-coded points; and
perform entropy coding on the quantized attribute residual information for the K to-be-coded points to generate a binary bit stream.

Optionally, the apparatus further includes an attribute reconstruction module configured to:

perform inverse quantization on a coded value obtained after the entropy coding to obtain inverse attribute residual information after inverse quantization of the K to-be-coded points; and
obtain attribute reconstruction information for the K to-be-coded points based on the attribute prediction information and the inverse attribute residual information for the K to-be-coded points.

Optionally, the apparatus further includes:

a third determining module, configured to obtain identification information, where the identification information is used to indicate whether the apparatus performs encoding of point cloud attribute information; and
determine, based on the identification information, whether the apparatus performs encoding of point cloud attribute information; and
a writing module, configured to write the identification information into the binary bit stream.

It should be noted that the apparatus performing encoding of point cloud attribute information means that the apparatus performs corresponding operations based on the foregoing modules (for example, the first obtaining module and the first determining module), which will not be repeated herein.

In this embodiment of this application, in the process of encoding the to-be-coded point cloud, the point cloud attribute information encoding apparatus needs to determine, based on the attribute prediction information for the to-be-coded points or the attribute reconstruction information for the coded points, whether to perform DCT transform on the to-be-coded points. In a case that it is determined to perform DCT transform on the to-be-coded points, DCT transform is performed on the to-be-coded points, so as to convert a dispersed distribution of the attribute information in the spatial domain to a relatively centralized distribution in the transform domain. In this way, signal energy is concentrated in a few coefficients, facilitating quantization and coding. This removes attribute redundancy, thereby improving the attribute coding efficiency and reconstruction performance.

The point cloud attribute information encoding apparatus in this embodiment of this application may be an apparatus, or an apparatus or electric device having an operating system, or may be a component, an integrated circuit, or a chip in a terminal. The apparatus or electric device may be a mobile terminal or a non-mobile terminal. For example, the mobile terminal may include but is not limited to the types of the terminal listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The point cloud attribute information encoding apparatus provided in this embodiment of this application is capable of implementing the processes implemented in the method embodiments in FIG. 3 or FIG. 4, with the same technical effects achieved. To avoid repetition, details are not described herein again.

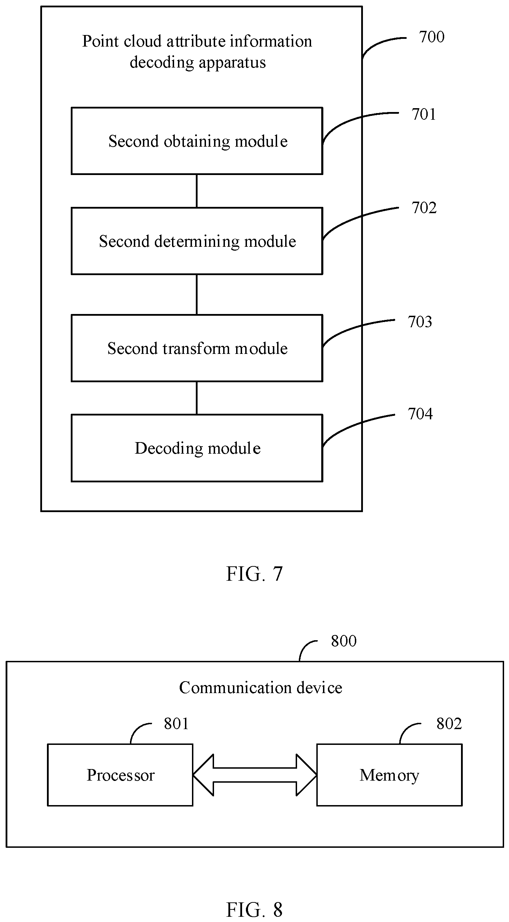

Referring to FIG. 7, FIG. 7 is a structural diagram of a point cloud attribute information decoding apparatus according to an embodiment of this application. As shown in FIG. 7, the point cloud attribute information decoding apparatus 700 includes:

a second obtaining module 701, configured to obtain third information;
a second determining module 702, configured to determine, based on fourth information associated with the third information, whether to perform inverse DCT transform on K to-be-decoded points;
a second transform module 703, configured to: in a case that it is determined to perform inverse DCT transform on the K to-be-decoded points, perform inverse DCT transform on the K to-be-decoded points, so as to obtain attribute residual information for the K to-be-decoded points; and
a decoding module 704, configured to obtain attribute reconstruction information for the K to-be-decoded points based on the attribute residual information and attribute prediction information that are for the K to-be-decoded points, so as to decode un-decoded points in a to-be-decoded point cloud; where
the third information includes the K to-be-decoded points and the fourth information includes attribute prediction information for the K to-be-decoded points; or the third information includes N decoded points prior to the K to-be-decoded points, and the fourth information includes attribute reconstruction information for the N decoded points, K being a positive integer and N being an integer greater than 1.

Optionally, the third information includes the K to-be-decoded points and the fourth information includes attribute prediction information for the K to-be-decoded points.

The second determining module 702 is further configured to:

obtain a maximum attribute prediction value and a minimum attribute prediction value in the attribute prediction information corresponding to the K to-be-decoded points, and in a case that an absolute difference between the maximum attribute prediction value and the minimum attribute prediction value is less than a first threshold, determine to perform inverse DCT transform on the K to-be-decoded points; or
in a case that an absolute ratio of the maximum attribute prediction value to the minimum attribute prediction value is less than a second threshold, determine to perform inverse DCT transform on the K to-be-decoded points.

Optionally, the third information includes N decoded points prior to the K to-be-decoded points, and the fourth information includes attribute reconstruction information for the N decoded points.

The second determining module 702 is further configured to:

obtain a maximum attribute reconstruction value and a minimum attribute reconstruction value in the attribute reconstruction information corresponding to the N decoded points, and in a case that an absolute difference between the maximum attribute reconstruction value and the minimum attribute reconstruction value is less than a third threshold, determine to perform inverse DCT transform on the K to-be-decoded points; or
in a case that an absolute ratio of the maximum attribute reconstruction value to the minimum attribute reconstruction value is less than a fourth threshold, determine to perform inverse DCT transform on the K to-be-decoded points.

Optionally, the third information includes the K to-be-decoded points, and the second obtaining module 701 is further configured to:
perform sorting on a to-be-decoded point cloud and obtain K to-be-decoded points in the sorted to-be-decoded point cloud.

Optionally, the second obtaining module 701 is further configured to:

calculate a Hilbert code corresponding to each point in the to-be-decoded point cloud, performing sorting on the to-be-decoded point cloud based on the Hilbert codes, and sequentially select the K to-be-decoded points in the sorted to-be-decoded point cloud; or
calculate a Morton code corresponding to each point in the to-be-decoded point cloud, performing sorting on the to-be-decoded point cloud based on the Morton codes, and sequentially select the K to-be-decoded points in the sorted to-be-decoded point cloud.

Optionally, the apparatus further includes an attribute prediction module configured to:

obtain S neighboring points with a closest Manhattan distance to a target to-be-decoded point according to a bi-Hilbert order or a bi-Morton order, where the target to-be-decoded point is any one of the K to-be-decoded points;
determine initial attribute prediction information for the target to-be-decoded point based on the S neighboring points; and
determine attribute prediction information for the target to-be-decoded point based on a first weight corresponding to the target to-be-decoded point and the initial attribute prediction information.

Optionally, the attribute prediction module is further configured to:

in a given preset search range, obtain the preceding-order M points of the target to-be-decoded point according to a Hilbert-1 order, obtain the preceding-order N1 points and post-order N2 points of the target to-be-decoded point according to a Hilbert-2 order, and obtain the S neighboring points with the closest Manhattan distance to the target to-be-decoded point within a target range determined based on M, N1, and N2; or

in the given preset search range, obtain the preceding-order M points of the target to-be-decoded point according to a Morton-1 order, obtain the preceding-order N1 points and post-order N2 points of the target to-be-decoded point according to a Morton-2 order, and obtain the S neighboring points with the closest Manhattan distance to the target to-be-decoded point within a target range determined based on M, N1, and N2; where

M, N1, and N2 are all positive integers.

Optionally, a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range;

the binary bit stream includes a first attribute parameter and a second attribute parameter, where the first attribute parameter is used to represent the first preset range and the second attribute parameter is used to represent the second preset range; and

in a case that the post-order search range of the Hilbert-2 order or Morton-2 order is the third preset range, the binary bit stream further includes a third attribute parameter, where the third attribute parameter is used to represent the third preset range.

Optionally, the given preset search range is determined based on a correlation between an initial number of points of a point cloud sequence and a bounding box volume of an input point cloud.

Optionally, the attribute prediction module is further configured to:

determine the initial attribute prediction information for the target to-be-decoded point based on each neighboring point in the S neighboring points and a corresponding second weight, where the second weight is a reciprocal of a Manhattan distance between the target to-be-decoded point and the neighboring point.

Optionally, the third information includes the K to-be-decoded points, and the attribute prediction module is further configured to:

obtain T neighboring points of a reference point by using the 1 st point of the K to-be-decoded points as the reference point;

obtain R neighboring points with a closest Manhattan distance to the reference point in the T neighboring points;

obtain L neighboring points, with a closest Manhattan distance to a target to-be-decoded point of the K to-be-decoded points, in the R neighboring points, where the target to-be-decoded point is any one of the K to-be-decoded points;

determine initial attribute prediction information for the target to-be-decoded point based on the L neighboring points; and

determine attribute prediction information for the target to-be-decoded point based on a first weight corresponding to the target to-be-decoded point and the initial attribute prediction information; where

T, R, and L are all positive integers.

Optionally, the attribute prediction module is further configured to:

determine the initial attribute prediction information for the target to-be-decoded point based on each neighboring point in the L neighboring points and a corresponding second weight, where the second weight is a reciprocal of a Manhattan distance between the target to-be-decoded point and the neighboring point.

Optionally, a sum of the first weights respectively corresponding to the K to-be-decoded points is 1.

Optionally, the apparatus further includes an inverse quantization module configured to:

obtain a transform coefficient of the K to-be-decoded points; and

perform inverse quantization on the transform coefficient to obtain an inverse-quantized transform coefficient.

The second transform module 703 is further configured to:

perform inverse DCT transform on the K to-be-decoded points based on the inverse-quantized transform coefficient.

Optionally, the transform coefficient includes a high-frequency coefficient and a low-frequency coefficient, and the inverse quantization module is further configured to:

obtain a high-frequency coefficient quantization step corresponding to the high frequency coefficient, and obtain a low-frequency coefficient quantization step corresponding to the low-frequency coefficient; and

perform inverse quantization on the high frequency coefficient based on the high frequency coefficient and the high frequency coefficient quantization step, and perform inverse quantization on the low-frequency coefficient based on the low-frequency coefficient and the low-frequency coefficient quantization step.

Optionally, the inverse quantization module is further configured to:
obtain the high-frequency coefficient quantization step corresponding to the high-frequency coefficient, and obtain a low-frequency coefficient quantization step corresponding to the low-frequency coefficient, based on a distribution status of components corresponding to attribute information for the K to-be-decoded points.

Optionally, the inverse quantization module is further configured to:

in a case that distribution of the components corresponding to the attribute information for the K to-be-decoded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and

in a case that distribution of the components corresponding to the attribute information for the K to-be-decoded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

Optionally, a value obtained after quantization of the high frequency coefficient is 0 in a case the high frequency coefficient is less than a first preset threshold, and a value obtained after quantization of the low-frequency coefficient is 0 in a case the low-frequency coefficient is less than a second preset threshold.

Optionally, the apparatus further includes a quantization module configured to:
in a case that it is determined not to perform inverse DCT transform on the K to-be-decoded points, quantize the transform coefficient of the K to-be-decoded points, so as to obtain the attribute residual information for the K to-be-decoded points.

Optionally, the apparatus further includes a fourth obtaining module configured to:

obtain identification information from a binary bit stream, where the identification information is used to indicate whether the apparatus performs decoding of point cloud attribute information; and

determine, based on the identification information, whether the apparatus performs decoding of point cloud attribute information.

It should be noted that the apparatus performing decoding of point cloud attribute information means that the apparatus performs corresponding operations based on the foregoing modules (for example, the second obtaining module and the second determining module), which will not be repeated herein.

According to the point cloud attribute information decoding apparatus in this embodiment of this application, in the process of decoding the to-be-decoded point cloud, it is necessary to determine, based on the attribute prediction information for the to-be-decoded points or the attribute reconstruction information for the decoded points, whether to perform DCT transform on the to-be-decoded points. In a case that it is determined to perform DCT transform on the to-be-decoded points, DCT transform is performed on the to-be-decoded points, so as to convert a dispersed distribution of the attribute information in the spatial domain to a relatively centralized distribution in the transform domain. In this way, signal energy is concentrated in a few coefficients, facilitating quantization and decoding. This removes attribute redundancy, thereby improving the attribute decoding efficiency and reconstruction performance.

The point cloud attribute information decoding apparatus in this embodiment of this application may be an apparatus, or an apparatus or electric device having an operating system, or may be a component, an integrated circuit, or a chip in a terminal. The apparatus or electric device may be a mobile terminal or a non-mobile terminal. For example, the mobile terminal may include but is not limited to the types of the terminal listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The point cloud attribute information decoding apparatus provided in this embodiment of this application is capable of implementing the processes implemented in the method embodiment in FIG. 5, with the same technical effects achieved. To avoid repetition, details are not described herein again.

Optionally, as shown in FIG. 8, an embodiment of this application further provides a communication device 800, including a processor 801, a memory 802, and a program or instructions stored in the memory 802 and capable of running on the processor 801. When the communication device 800 is a terminal and the program or the instructions are executed by the processor 801, the processes of the foregoing method embodiment in the foregoing FIG. 3 or FIG. 4 are implemented or the processes of the foregoing method embodiment in the foregoing FIG. 5 are implemented, with the same technical effects achieved. To avoid repetition, details are not described herein again.

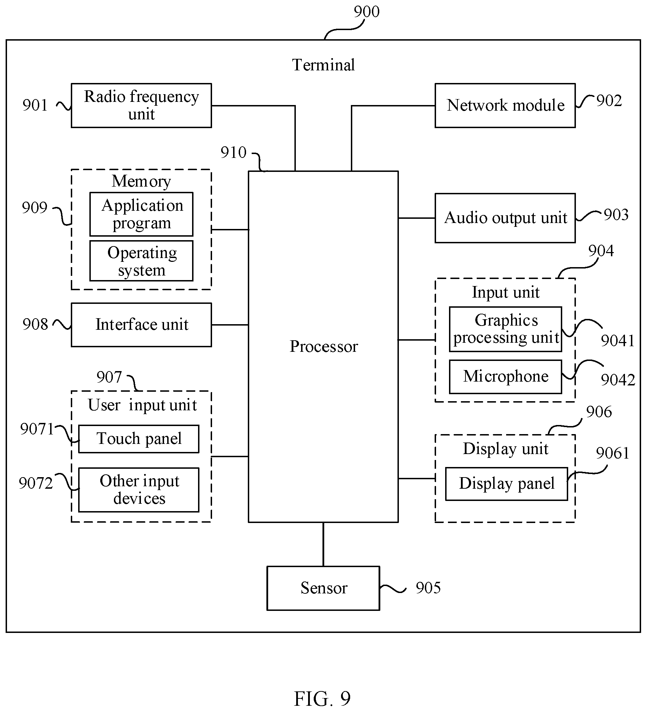

An embodiment of this application further provides a terminal including a processor and a communication interface, and the processor is configured to implement the processes of the method embodiment described in the foregoing FIG. 3 or FIG. 4, or to implement the processes of the foregoing method embodiment in the foregoing FIG. 5. The terminal embodiments correspond to the foregoing terminal-side method embodiments, and the implementation processes and implementations of the foregoing method embodiments can be applied to the terminal embodiments, with the same technical effects achieved. Specifically, FIG. 9 is a schematic diagram of a hardware structure of a terminal for implementing the embodiments of this application.

The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, the radio frequency unit 901 receives downlink data from a network-side device, and then sends the downlink data to the processor 910 for processing; and also sends uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may include a program or instruction storage area and a data storage area. The program or instruction storage area may store an operating system, an application program or instruction required by at least one function (for example, a sound playback function or an image playback function), and the like. In addition, the memory 909 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, an application processor and a modem processor may be integrated in the processor 910. The application processor primarily processes an operating system, user interfaces, application programs or instructions, and the like. The modem processor primarily processes radio communication, for example, being a baseband processor. It can be understood that the modem processor may alternatively be not integrated in the processor 910.

In an implementation, the processor 910 is configured to:

obtain first information;
determine, based on second information associated with the first information, whether to perform discrete cosine transform DCT transform on K to-be-coded points;
in a case that it is determined to perform DCT transform on the K to-be-coded points, perform DCT transform on the K to-be-coded points to obtain a transform coefficient of the K to-be-coded points; and
quantize the transform coefficient of the K to-be-coded points and perform entropy coding based on a quantized transform coefficient, to generate a binary bit stream; where
the first information includes the K to-be-coded points and the second information includes attribute prediction information for the K to-be-coded points; or the first information includes N coded points prior to the K to-be-coded points and the second information includes attribute reconstruction information for the N coded points, where K is a positive integer, and N is an integer greater than 1.

Optionally, the first information includes the K to-be-coded points and the second information includes attribute prediction information for the K to-be-coded points; and the processor 910 is further configured to:

obtain a maximum attribute prediction value and a minimum attribute prediction value in the attribute prediction information corresponding to the K to-be-coded points, and in a case that an absolute difference between the maximum attribute prediction value and the minimum attribute prediction value is less than a first threshold, determine to perform DCT transform on the K to-be-coded points; or
in a case that an absolute ratio of the maximum attribute prediction value to the minimum attribute prediction value is less than a second threshold, determine to perform DCT transform on the K to-be-coded points.

Optionally, the first information includes N coded points prior to the K to-be-coded points and the second information includes attribute reconstruction information for the N coded points; and the processor 910 is further configured to:

obtain a maximum attribute reconstruction value and a minimum attribute reconstruction value in the attribute reconstruction information corresponding to the N coded points, and in a case that an absolute difference between the maximum attribute reconstruction value and the minimum attribute reconstruction value is less than a third threshold, determine to perform DCT transform on the K to-be-coded points; or
in a case that an absolute ratio of the maximum attribute reconstruction value to the minimum attribute reconstruction value is less than a fourth threshold, determine to perform DCT transform on the K to-be-coded points.

Optionally, the first information includes K to-be-coded points; and the processor 910 is further configured to: perform sorting on points of a to-be-coded point cloud and obtain K to-be-coded points in the sorted to-be-coded point cloud.
Optionally, the processor 910 is further configured to:

calculate a Hilbert code corresponding to each point in the to-be-coded point cloud, perform sorting on the points of the to-be-coded point cloud based on the Hilbert codes, and sequentially select the K to-be-coded points in the sorted to-be-coded point cloud; or
calculate a Morton code corresponding to each point in the to-be-coded point cloud, perform sorting on the points of the to-be-coded point cloud based on the Morton codes, and sequentially select the K to-be-coded points in the sorted to-be-coded point cloud.

Optionally, the processor 910 is further configured to:

obtain S neighboring points with a closest Manhattan distance to a target to-be-coded point according to a bi-Hilbert order or a bi-Morton order, where the target to-be-coded point is any one of the K to-be-coded points;
determine initial attribute prediction information for the target to-be-coded point based on the S neighboring points; and
determine attribute prediction information for the target to-be-coded point based on a first weight corresponding to the target to-be-coded point and the initial attribute prediction information.

Optionally, the processor 910 is further configured to:

in a given preset search range, obtain the preceding-order M points of the target to-be-coded point according to a Hilbert-1 order, obtain the preceding-order N1 points and post-order N2 points of the target to-be-coded point according to a Hilbert-2 order, and obtain the S neighboring points with the closest Manhattan distance to the target to-be-coded point within a target range determined based on M, N1, and N2; or
in the given preset search range, obtain the preceding-order M points of the target to-be-coded point according to a Morton-1 order, obtain the preceding-order N1 points and post-order N2 points of the target to-be-coded point according to a Morton-2 order, and obtain the S neighboring points with the closest Manhattan distance to the target to-be-coded point within a target range determined based on M, N1, and N2; where
M, N1, and N2 are all positive integers.

Optionally, a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range or the second preset range.

The binary bit stream includes a first attribute parameter and a second attribute parameter, where the first attribute parameter is used to represent the first preset range and the second attribute parameter is used to represent the second preset range; and

in a case that the post-order search range of the Hilbert-2 order or Morton-2 order is the third preset range, the binary bit stream further includes a third attribute parameter, where the third attribute parameter is used to represent the third preset range.

Optionally, the given preset search range is determined based on a correlation between an initial number of points of a point cloud sequence and a bounding box volume of an input point cloud.

Optionally, the processor 910 is further configured to:

determine the initial attribute prediction information for the target to-be-coded point based on each neighboring point in the S neighboring points and a corresponding second weight, where the second weight is a reciprocal of a Manhattan distance between the target to-be-coded point and the neighboring point.

Optionally, the first information includes K to-be-coded points; and the processor 910 is further configured to:

obtain T neighboring points of a reference point by using the 1 st point of the K to-be-coded points as the reference point;

obtain R neighboring points with a closest Manhattan distance to the reference point in the T neighboring points;

obtain L neighboring points, with a closest Manhattan distance to a target to-be-coded point of the K to-be-coded points, in the R neighboring points, where the target to-be-coded point is any one of the K to-be-coded points;

determine initial attribute prediction information for the target to-be-coded point based on the L neighboring points; and

determine attribute prediction information for the target to-be-coded point based on a first weight corresponding to the target to-be-coded point and the initial attribute prediction information; where

T, R, and L are all positive integers.

Optionally, the processor 910 is further configured to:

determine the initial attribute prediction information for the target to-be-coded point based on each neighboring point in the L neighboring points and a corresponding second weight, where the second weight is a reciprocal of a Manhattan distance between the target to-be-coded point and the neighboring point.

Optionally, a sum of the first weights respectively corresponding to the K to-be-coded points is 1.

Optionally, the processor 910 is further configured to:

obtain attribute residual information for the K to-be-coded points based on attribute prediction information for the K to-be-coded points; and

the performing DCT transform on K to-be-coded points to obtain a transform coefficient of the K to-be-coded points includes:

performing DCT transform on the attribute residual information for the K to-be-coded points to obtain the transform coefficient corresponding to the K to-be-coded points.

Optionally, the processor 910 is further configured to:

perform inverse quantization on the quantized transform coefficient, and perform inverse transform on an inverse transform coefficient obtained after inverse quantization, so as to obtain attribute reconstruction information for the K to-be-coded points.

Optionally, the processor 910 is further configured to:

quantize a high frequency coefficient and low-frequency coefficient corresponding to the K to-be-coded points, and perform entropy coding on the quantized high frequency coefficient and low-frequency coefficient to obtain a first coded value and a second coded value respectively.

The performing inverse quantization on the quantized transform coefficient, and performing inverse transform on an inverse transform coefficient obtained after inverse quantization, so as to obtain attribute reconstruction information for the K to-be-coded points includes:

performing inverse quantization on the first coded value and the second coded value to obtain an inverse high-frequency coefficient and inverse low-frequency coefficient after inverse quantization;

performing inverse DCT transform based on the inverse high-frequency coefficient and the inverse low-frequency coefficient to obtain inverse attribute residual information corresponding to the K to-be-coded points; and

obtaining attribute reconstruction information for the K to-be-coded points based on the attribute prediction information and the inverse attribute residual information for the K to-be-coded points.

Optionally, the processor 910 is further configured to:

obtain a high-frequency coefficient quantization step corresponding to the high frequency coefficient, and obtain a low-frequency coefficient quantization step corresponding to the low-frequency coefficient; and quantize the high frequency coefficient based on the high frequency coefficient and the high frequency coefficient quantization step, and quantize the low-frequency coefficient based on the low-frequency coefficient and the low-frequency coefficient quantization step.

Optionally, the processor 910 is further configured to:
obtain the high-frequency coefficient quantization step corresponding to the high-frequency coefficient, and obtain a low-frequency coefficient quantization step corresponding to the low-frequency coefficient, based on a distribution status of components corresponding to attribute information for the K to-be-coded points.

Optionally, the processor 910 is further configured to:

in a case that distribution of the components corresponding to the attribute information for the K to-be-coded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and in a case that distribution of the components corresponding to the attribute information for the K to-be-coded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

Optionally, a value obtained after quantization of the high frequency coefficient is 0 in a case the high frequency coefficient is less than a first preset threshold, and a value obtained after quantization of the low-frequency coefficient is 0 in a case the low-frequency coefficient is less than a second preset threshold.

Optionally, the processor 910 is further configured to:

in a case that it is determined not to perform DCT transform on the K to-be-coded points, quantize the attribute residual information for the K to-be-coded points; and perform entropy coding on the quantized attribute residual information for the K to-be-coded points to generate a binary bit stream.

Optionally, the processor 910 is further configured to:

perform inverse quantization on a coded value obtained after the entropy coding to obtain inverse attribute residual information after inverse quantization of the K to-be-coded points; and obtain attribute reconstruction information for the K to-be-coded points based on the attribute prediction information and the inverse attribute residual information for the K to-be-coded points.

Optionally, the processor 910 is further configured to:

obtain identification information from a binary bit stream, where the identification information is used to indicate whether the processor 910 performs encoding of point cloud attribute information; determine, based on the identification information, whether the processor 910 performs encoding of point cloud attribute information; and write the identification information into the binary bit stream.

The processor 910 performing encoding of point cloud attribute information means that the processor 910 performs the foregoing steps to implement encoding of point cloud attribute information, or to implement the point cloud attribute information encoding method as described in FIG. 3 or FIG. 4. For specific implementations, details are not repeated herein.

In the implementations, in the process of encoding the to-be-coded point cloud, the terminal 900 needs to determine, based on the attribute prediction information for the to-be-coded points or the attribute reconstruction information for the coded points, whether to perform DCT transform on the to-be-coded points. In a case that it is determined to perform DCT transform on the to-be-coded points, DCT transform is performed on the to-be-coded points, so as to convert a dispersed distribution of the attribute information in the spatial domain to a relatively centralized distribution in the transform domain. In this way, signal energy is concentrated in a few coefficients, facilitating quantization and coding. This removes attribute redundancy, thereby improving the attribute coding efficiency and reconstruction performance.

Alternatively, in another implementation, the processor 910 is configured to:

obtain third information;
determine, based on fourth information associated with the third information, whether to perform inverse DCT transform on K to-be-decoded points;
in a case that it is determined to perform inverse DCT transform on the K to-be-decoded points, perform inverse DCT transform on the K to-be-decoded points, so as to obtain attribute residual information for the K to-be-decoded points; and
obtain attribute reconstruction information for the K to-be-decoded points based on the attribute residual information and attribute prediction information that are for the K to-be-decoded points, so as to decode un-decoded points in a to-be-decoded point cloud; where
the third information includes the K to-be-decoded points and the fourth information includes attribute prediction information for the K to-be-decoded points; or the third information includes N decoded points prior to the K to-be-decoded points, and the fourth information includes attribute reconstruction information for the N decoded points, K being a positive integer and N being an integer greater than 1.

Optionally, the third information includes the K to-be-decoded points and the fourth information includes attribute prediction information for the K to-be-decoded points; and the processor 910 is further configured to:

obtain a maximum attribute prediction value and a minimum attribute prediction value in the attribute prediction information corresponding to the K to-be-decoded points, and in a case that an absolute difference between the maximum attribute prediction value and the minimum attribute prediction value is less than a first threshold, determine to perform inverse DCT transform on the K to-be-decoded points; or
in a case that an absolute ratio of the maximum attribute prediction value to the minimum attribute prediction value is less than a second threshold, determine to perform inverse DCT transform on the K to-be-decoded points.

Optionally, the third information includes N decoded points prior to the K to-be-decoded points, and the fourth information includes attribute reconstruction information for the N decoded points; and the processor 910 is further configured to:

obtain a maximum attribute reconstruction value and a minimum attribute reconstruction value in the attribute reconstruction information corresponding to the N decoded points, and in a case that an absolute difference between the maximum attribute reconstruction value and the minimum attribute reconstruction value is less than a third threshold, determine to perform inverse DCT transform on the K to-be-decoded points; or
in a case that an absolute ratio of the maximum attribute reconstruction value to the minimum attribute reconstruction value is less than a fourth threshold, determine to perform inverse DCT transform on the K to-be-decoded points.

Optionally, the third information includes the K to-be-decoded points; and the processor 910 is further configured to:
perform sorting on a to-be-decoded point cloud and obtain K to-be-decoded points in the sorted to-be-decoded point cloud.

Optionally, the processor 910 is further configured to:

calculate a Hilbert code corresponding to each point in the to-be-decoded point cloud, perform sorting on the to-be-decoded point cloud based on the Hilbert codes, and sequentially select the K to-be-decoded points in the sorted to-be-decoded point cloud; or
calculate a Morton code corresponding to each point in the to-be-decoded point cloud, perform sorting on the to-be-decoded point cloud based on the Morton codes, and sequentially select the K to-be-decoded points in the sorted to-be-decoded point cloud.

Optionally, the processor 910 is further configured to:

obtain S neighboring points with a closest Manhattan distance to a target to-be-decoded point according to a bi-Hilbert order or a bi-Morton order, where the target to-be-decoded point is any one of the K to-be-decoded points;

determine initial attribute prediction information for the target to-be-decoded point based on the S neighboring points; and

determine attribute prediction information for the target to-be-decoded point based on a first weight corresponding to the target to-be-decoded point and the initial attribute prediction information.

Optionally, the processor 910 is further configured to:

in a given preset search range, obtain the preceding-order M points of the target to-be-decoded point according to a Hilbert-1 order, obtain the preceding-order N1 points and post-order N2 points of the target to-be-decoded point according to a Hilbert-2 order, and obtain the S neighboring points with the closest Manhattan distance to the target to-be-decoded point within a target range determined based on M, N1, and N2; or

in the given preset search range, obtain the preceding-order M points of the target to-be-decoded point according to a Morton-1 order, obtain the preceding-order N1 points and post-order N2 points of the target to-be-decoded point according to a Morton-2 order, and obtain the S neighboring points with the closest Manhattan distance to the target to-be-decoded point within a target range determined based on M, N1, and N2; where

M, N1, and N2 are all positive integers.

Optionally, a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range;

the binary bit stream includes a first attribute parameter and a second attribute parameter, where the first attribute parameter is used to represent the first preset range and the second attribute parameter is used to represent the second preset range; and

in a case that the post-order search range of the Hilbert-2 order or Morton-2 order is the third preset range, the binary bit stream further includes a third attribute parameter, where the third attribute parameter is used to represent the third preset range.

Optionally, the given preset search range is determined based on a correlation between an initial number of points of a point cloud sequence and a bounding box volume of an input point cloud.

Optionally, the processor 910 is further configured to:

determine the initial attribute prediction information for the target to-be-decoded point based on each neighboring point in the S neighboring points and a corresponding second weight, where the second weight is a reciprocal of a Manhattan distance between the target to-be-decoded point and the neighboring point.

Optionally, the processor 910 is further configured to:

obtain T neighboring points of a reference point by using the 1st point of the K to-be-decoded points as the reference point;

obtain R neighboring points with a closest Manhattan distance to the reference point in the T neighboring points;

obtain L neighboring points, with a closest Manhattan distance to a target to-be-decoded point of the K to-be-decoded points, in the R neighboring points, where the target to-be-decoded point is any one of the K to-be-decoded points;

determine initial attribute prediction information for the target to-be-decoded point based on the L neighboring points; and

determine attribute prediction information for the target to-be-decoded point based on a first weight corresponding to the target to-be-decoded point and the initial attribute prediction information; where

T, R, and L are all positive integers.

Optionally, the processor 910 is further configured to:

determine the initial attribute prediction information for the target to-be-decoded point based on each neighboring point in the L neighboring points and a corresponding second weight, where the second weight is a reciprocal of a Manhattan distance between the target to-be-decoded point and the neighboring point.

Optionally, a sum of the first weights respectively corresponding to the K to-be-decoded points is 1.

Optionally, the processor 910 is further configured to:

obtain a transform coefficient of the K to-be-decoded points; and

perform inverse quantization on the transform coefficient to obtain an inverse-quantized transform coefficient.

The performing inverse DCT transform on K to-be-decoded points includes:

performing inverse DCT transform on the K to-be-decoded points based on the inverse-quantized transform coefficient.

Optionally, the transform coefficient includes a high-frequency coefficient and a low-frequency coefficient, and the processor 910 is further configured to:

obtain a high-frequency coefficient quantization step corresponding to the high frequency coefficient, and obtain a low-frequency coefficient quantization step corresponding to the low-frequency coefficient; and

perform inverse quantization on the high frequency coefficient based on the high frequency coefficient and the high frequency coefficient quantization step, and perform inverse quantization on the low-frequency coefficient based on the low-frequency coefficient and the low-frequency coefficient quantization step.

Optionally, the processor 910 is further configured to:

obtain the high-frequency coefficient quantization step corresponding to the high-frequency coefficient, and obtain a low-frequency coefficient quantization step corresponding to the low-frequency coefficient, based on a distribution status of components corresponding to attribute information for the K to-be-decoded points.

Optionally, the processor 910 is further configured to:

in a case that distribution of the components corresponding to the attribute information for the K to-be-decoded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and

in a case that distribution of the components corresponding to the attribute information for the K to-be-decoded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

Optionally, a value obtained after quantization of the high frequency coefficient is 0 in a case the high frequency coefficient is less than a first preset threshold, and a value obtained after quantization of the low-frequency coefficient is 0 in a case the low-frequency coefficient is less than a second preset threshold.

Optionally, the processor 910 is further configured to:

in a case that it is determined not to perform inverse DCT transform on the K to-be-decoded points, quantize the transform coefficient of the K to-be-decoded points, so as to obtain the attribute residual information for the K to-be-decoded points.

Optionally, the processor 910 is further configured to:

obtain identification information from a binary bit stream, where the identification information is used to indicate whether the processor 910 performs decoding of point cloud attribute information; and

determine, based on the identification information, whether the processor 910 performs decoding of point cloud attribute information.

The processor 910 performing decoding of point cloud attribute information means that the processor 910 performs the foregoing steps to implement decoding of point cloud attribute information, or to implement the point cloud attribute information decoding method as described in FIG. 5. For specific implementations, details are not repeated herein.

In the implementations, in the process of decoding the to-be-decoded point cloud, the terminal 900 needs to determine, based on the attribute prediction information for the to-be-decoded points or the attribute reconstruction information for the decoded points, whether to perform DCT transform on the to-be-decoded points. In a case that it is determined to perform DCT transform on the to-be-decoded points, DCT transform is performed on the to-be-decoded points, so as to convert a dispersed distribution of the attribute information in the spatial domain to a relatively centralized distribution in the transform domain. In this way, signal energy is concentrated in a few coefficients, facilitating quantization and decoding. This removes attribute redundancy, thereby improving the attribute decoding efficiency and reconstruction performance.

An embodiment of this application further provides a readable storage medium, where a program or instructions are stored in the readable storage medium. When the program or the instructions are executed by a processor, the processes of the foregoing method embodiment in FIG. 3 or FIG. 4 are implemented or the processes of the foregoing method embodiment in FIG. 5 are implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing method embodiment in FIG. 3 or FIG. 4 or the processes of the foregoing method embodiment in FIG. 5, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transitory storage medium, and when being executed by at least one processor, the computer program product is configured to implement the processes of the foregoing method embodiment in FIG. 3 or FIG. 4 or the processes of the foregoing method embodiment in FIG. 5, with the same technical effects achieved. To avoid repetition, details are not repeated herein.

An embodiment of this application further provides a communication device, configured to perform the processes of the foregoing method embodiments in FIG. 3 or FIG. 4 or the processes of the foregoing method embodiments in FIG. 5, with the same technical effects achieved. To avoid repetition, details are not described herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1.  A point cloud attribute information encoding method, comprising:

    performing discrete cosine transform DCT transform on K to-be-coded points to obtain a transform coefficient of the K to-be-coded points; and
    quantizing the transform coefficient of the K to-be-coded points and performing entropy coding based on a quantized transform coefficient, to generate a binary bit stream.

2.  The method according to claim 1, wherein before the performing DCT transform on K to-be-coded points, the method further comprises:

    obtaining first information; and
    determining, based on second information associated with the first information, to perform DCT transform on the K to-be-coded points; wherein
    the first information comprises the K to-be-coded points and the second information comprises attribute prediction information for the K to-be-coded points; or the first information comprises N coded points prior to the K to-be-coded points and the second information comprises attribute reconstruction information for the N coded points, wherein K is a positive integer, and N is an integer greater than 1.

3. The method according to claim 2, wherein the first information comprises the K to-be-coded points and the second information comprises the attribute prediction information for the K to-be-coded points; and
the determining, based on second information associated with the first information, to perform DCT transform on the K to-be-coded points comprises:

> obtaining a maximum attribute prediction value and a minimum attribute prediction value in the attribute prediction information corresponding to the K to-be-coded points, and in a case that an absolute difference between the maximum attribute prediction value and the minimum attribute prediction value is less than a first threshold, determining to perform DCT transform on the K to-be-coded points; or
> in a case that an absolute ratio of the maximum attribute prediction value to the minimum attribute prediction value is less than a second threshold, determining to perform DCT transform on the K to-be-coded points.

4. The method according to claim 2, wherein the first information comprises N coded points prior to the K to-be-coded points and the second information comprises the attribute reconstruction information for the N coded points; and
the determining, based on second information associated with the first information, to perform DCT transform on the K to-be-coded points comprises:

> obtaining a maximum attribute reconstruction value and a minimum attribute reconstruction value in the attribute reconstruction information corresponding to the N coded points, and in a case that an absolute difference between the maximum attribute reconstruction value and the minimum attribute reconstruction value is less than a third threshold, determining to perform DCT transform on the K to-be-coded points; or
> in a case that an absolute ratio of the maximum attribute reconstruction value to the minimum attribute reconstruction value is less than a fourth threshold, determining to perform DCT transform on the K to-be-coded points.

5. The method according to claim 1, wherein the method further comprises:
performing sorting on points of a to-be-coded point cloud and obtaining K to-be-coded points in the sorted to-be-coded point cloud.

6. The method according to claim 5, wherein the performing sorting on points of a to-be-coded point cloud and obtaining K to-be-coded points in the sorted to-be-coded point cloud comprises:

> calculating a Hilbert code corresponding to each point in the to-be-coded point cloud, performing sorting on the points of the to-be-coded point cloud based on the Hilbert codes, and sequentially selecting the K to-be-coded points in the sorted to-be-coded point cloud; or
> calculating a Morton code corresponding to each point in the to-be-coded point cloud, performing sorting on the points of the to-be-coded point cloud based on the Morton codes, and sequentially selecting the K to-be-coded points in the sorted to-be-coded point cloud.

7. The method according to claim 2, wherein before the determining, based on second information associated with the first information, to perform DCT transform on the K to-be-coded points, the method further comprises:

> obtaining S neighboring points with a closest Manhattan distance to a target to-be-coded point according to a bi-Hilbert order or a bi-Morton order, wherein the target to-be-coded point is any one of the K to-be-coded points;
> determining initial attribute prediction information for the target to-be-coded point based on the S neighboring points; and
> determining attribute prediction information for the target to-be-coded point based on a first weight corresponding to the target to-be-coded point and the initial attribute prediction information.

8. The method according to claim 7, wherein the obtaining S neighboring points with a closest Manhattan distance to a target to-be-coded point according to a bi-Hilbert order or a bi-Morton order comprises:

> in a given preset search range, obtaining the preceding-order M points of the target to-be-coded point according to a Hilbert-1 order, obtaining the preceding-order N1 points and post-order N2 points of the target to-be-coded point according to a Hilbert-2 order, and obtaining the S neighboring points with the closest Manhattan distance to the target to-be-coded point within a target range determined based on M, N1, and N2; or
in the given preset search range, obtaining the preceding-order M points of the target to-be-coded point according to a Morton-1 order, obtaining the preceding-order N1 points and post-order N2 points of the target to-be-coded point according to a Morton-2 order, and obtaining the S neighboring points with the closest Manhattan distance to the target to-be-coded point within a target range determined based on M, N1, and N2; wherein
M, N1, and N2 are all positive integers.

9.  The method according to claim 8, wherein a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range or the second preset range;

   the binary bit stream comprises a first attribute parameter and a second attribute parameter, wherein the first attribute parameter is used to represent the first preset range and the second attribute parameter is used to represent the second preset range; and
   in a case that the post-order search range of the Hilbert-2 order or Morton-2 order is the third preset range, the binary bit stream further comprises a third attribute parameter, wherein the third attribute parameter is used to represent the third preset range.

10. The method according to claim 8, wherein the given preset search range is determined based on a correlation between an initial number of points of a point cloud sequence and a bounding box volume of an input point cloud.

11. The method according to claim 7, wherein the determining initial attribute prediction information for the target to-be-coded point based on the S neighboring points comprises:
   determining the initial attribute prediction information for the target to-be-coded point based on each neighboring point in the S neighboring points and a corresponding second weight, wherein the second weight is a reciprocal of a Manhattan distance between the target to-be-coded point and the neighboring point.

12. The method according to claim 2, wherein the first information comprises the K to-be-coded points, and before the determining, based on second information associated with the first information, to perform DCT transform on the K to-be-coded points, the method further comprises:

   obtaining T neighboring points of a reference point by using the 1st point of the K to-be-coded points as the reference point;
   obtaining R neighboring points with a closest Manhattan distance to the reference point in the T neighboring points;
   obtaining L neighboring points, with a closest Manhattan distance to a target to-be-coded point of the K to-be-coded points, in the R neighboring points, wherein the target to-be-coded point is any one of the K to-be-coded points;
   determining initial attribute prediction information for the target to-be-coded point based on the L neighboring points; and
   determining attribute prediction information for the target to-be-coded point based on a first weight corresponding to the target to-be-coded point and the initial attribute prediction information; wherein
   T, R, and L are all positive integers.

13. The method according to claim 12, wherein the determining initial attribute prediction information for the target to-be-coded point based on the L neighboring points comprises:
   determining the initial attribute prediction information for the target to-be-coded point based on each neighboring point in the L neighboring points and a corresponding second weight, wherein the second weight is a reciprocal of a Manhattan distance between the target to-be-coded point and the neighboring point.

14. The method according to any one of claims 7 to 13, wherein a sum of the first weights respectively corresponding to the K to-be-coded points is 1.

15. The method according to claim 1, wherein before the performing DCT transform on K to-be-coded points to obtain a transform coefficient of the K to-be-coded points, the method further comprises:

   obtaining attribute residual information for the K to-be-coded points based on attribute prediction information for the K to-be-coded points; and

the performing DCT transform on K to-be-coded points to obtain a transform coefficient of the K to-be-coded points comprises:

performing DCT transform on the attribute residual information for the K to-be-coded points to obtain the transform coefficient corresponding to the K to-be-coded points.

16. The method according to claim 15, wherein after the quantizing the transform coefficient of the K to-be-coded points and performing entropy coding based on a quantized transform coefficient, the method further comprises:
performing inverse quantization on the quantized transform coefficient, and performing inverse transform on an inverse transform coefficient obtained after inverse quantization, so as to obtain attribute reconstruction information for the K to-be-coded points.

17. The method according to claim 16, wherein the transform coefficient comprises a low-frequency coefficient and a high-frequency coefficient, and the quantizing the transform coefficient of the K to-be-coded points and performing entropy coding based on a quantized transform coefficient comprises:

quantizing a high frequency coefficient and low-frequency coefficient corresponding to the K to-be-coded points, and performing entropy coding on the quantized high frequency coefficient and low-frequency coefficient to obtain a first coded value and a second coded value respectively; and

the performing inverse quantization on the quantized transform coefficient, and performing inverse transform on an inverse transform coefficient obtained after inverse quantization, so as to obtain attribute reconstruction information for the K to-be-coded points comprises:

performing inverse quantization on the first coded value and the second coded value to obtain an inverse high-frequency coefficient and inverse low-frequency coefficient after inverse quantization;

performing inverse DCT transform based on the inverse high-frequency coefficient and the inverse low-frequency coefficient to obtain inverse attribute residual information corresponding to the K to-be-coded points; and

obtaining the attribute reconstruction information for the K to-be-coded points based on the attribute prediction information and the inverse attribute residual information for the K to-be-coded points.

18. The method according to claim 17, wherein the quantizing a high frequency coefficient and low-frequency coefficient corresponding to the K to-be-coded points comprises:

obtaining a high-frequency coefficient quantization step corresponding to the high frequency coefficient, and obtaining a low-frequency coefficient quantization step corresponding to the low-frequency coefficient; and quantizing the high frequency coefficient based on the high frequency coefficient and the high frequency coefficient quantization step, and quantizing the low-frequency coefficient based on the low-frequency coefficient and the low-frequency coefficient quantization step.

19. The method according to claim 18, wherein the obtaining a high-frequency coefficient quantization step corresponding to the high frequency coefficient, and obtaining a low-frequency coefficient quantization step corresponding to the low-frequency coefficient comprises:
obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-coded points.

20. The method according to claim 19, wherein the obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-coded points comprises:

in a case that distribution of the components corresponding to the attribute information for the K to-be-coded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and

in a case that distribution of the components corresponding to the attribute information for the K to-be-coded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

21. The method according to claim 18, wherein a value obtained after quantization of the high frequency coefficient is 0 in a case that the high frequency coefficient is less than a first preset threshold, and a value obtained after quantization of the low-frequency coefficient is 0 in a case that the low-frequency coefficient is less than a second preset threshold.

22. The method according to claim 15, wherein the method further comprises:

in a case that it is determined not to perform DCT transform on the K to-be-coded points, quantizing the attribute residual information for the K to-be-coded points; and
performing entropy coding on the quantized attribute residual information for the K to-be-coded points to generate a binary bit stream.

23. The method according to claim 22, wherein after the performing entropy coding on the quantized attribute residual information for the K to-be-coded points, the method further comprises:

performing inverse quantization on a coded value obtained after the entropy coding to obtain inverse attribute residual information after inverse quantization of the K to-be-coded points; and
obtaining attribute reconstruction information for the K to-be-coded points based on the attribute prediction information and the inverse attribute residual information for the K to-be-coded points.

24. The method according to claim 2, wherein before the obtaining first information, the method further comprises:

obtaining identification information, wherein the identification information is used to indicate whether to perform the method; and
determining, based on the identification information, whether to perform the method; and
after the generating a binary bit stream, the method further comprises:
writing the identification information into the binary bit stream.

25. A point cloud attribute information decoding method, comprising:

performing inverse discrete cosine transform DCT transform on K to-be-decoded points to obtain attribute residual information for the K to-be-decoded points; and
obtaining attribute reconstruction information for the K to-be-decoded points based on the attribute residual information and attribute prediction information that are for the K to-be-decoded points, so as to decode un-decoded points in a to-be-decoded point cloud.

26. The method according to claim 24, wherein before the performing inverse DCT transform on K to-be-decoded points, the method further comprises:

obtaining third information; and
determining, based on fourth information associated with the third information, to perform inverse DCT transform on the K to-be-decoded points, wherein the third information comprises the K to-be-decoded points and the fourth information comprises attribute prediction information for the K to-be-decoded points; or the third information comprises N decoded points prior to the K to-be-decoded points, and the fourth information comprises attribute reconstruction information for the N decoded points, K being a positive integer and N being an integer greater than 1.

27. The method according to claim 26, wherein the third information comprises the K to-be-decoded points and the fourth information comprises the attribute prediction information for the K to-be-decoded points; and
the determining, based on fourth information associated with the third information, to perform inverse DCT transform on the K to-be-decoded points comprises:

obtaining a maximum attribute prediction value and a minimum attribute prediction value in the attribute prediction information corresponding to the K to-be-decoded points, and in a case that an absolute difference between the maximum attribute prediction value and the minimum attribute prediction value is less than a first threshold, determining to perform inverse DCT transform on the K to-be-decoded points; or

in a case that an absolute ratio of the maximum attribute prediction value to the minimum attribute prediction value is less than a second threshold, determining to perform inverse DCT transform on the K to-be-decoded points.

28. The method according to claim 26, wherein the third information comprises N decoded points prior to the K to-be-decoded points, and the fourth information comprises the attribute reconstruction information for the N decoded points; and

the determining, based on fourth information associated with the third information, to perform inverse DCT transform on the K to-be-decoded points comprises:

obtaining a maximum attribute reconstruction value and a minimum attribute reconstruction value in the attribute reconstruction information corresponding to the N decoded points, and in a case that an absolute difference between the maximum attribute reconstruction value and the minimum attribute reconstruction value is less than a third threshold, determining to perform inverse DCT transform on the K to-be-decoded points; or

in a case that an absolute ratio of the maximum attribute reconstruction value to the minimum attribute reconstruction value is less than a fourth threshold, determining to perform inverse DCT transform on the K to-be-decoded points.

29. The method according to claim 25, wherein the method further comprises:
performing sorting on a to-be-decoded point cloud and obtaining K to-be-decoded points in the sorted to-be-decoded point cloud.

30. The method according to claim 29, wherein the performing sorting on a to-be-decoded point cloud and obtaining K to-be-decoded points in the sorted to-be-decoded point cloud comprises:

calculating a Hilbert code corresponding to each point in the to-be-decoded point cloud, performing sorting on the to-be-decoded point cloud based on the Hilbert codes, and sequentially selecting the K to-be-decoded points in the sorted to-be-decoded point cloud; or

calculating a Morton code corresponding to each point in the to-be-decoded point cloud, performing sorting on the to-be-decoded point cloud based on the Morton codes, and sequentially selecting the K to-be-decoded points in the sorted to-be-decoded point cloud.

31. The method according to claim 26, wherein before the determining, based on fourth information associated with the third information, whether to perform inverse DCT transform on the K to-be-decoded points, the method further comprises:

obtaining S neighboring points with a closest Manhattan distance to a target to-be-decoded point according to a bi-Hilbert order or a bi-Morton order, wherein the target to-be-decoded point is any one of the K to-be-decoded points;

determining initial attribute prediction information for the target to-be-decoded point based on the S neighboring points; and

determining attribute prediction information for the target to-be-decoded point based on a first weight corresponding to the target to-be-decoded point and the initial attribute prediction information.

32. The method according to claim 31, wherein the obtaining S neighboring points with a closest Manhattan distance to a target to-be-decoded point according to a bi-Hilbert order or a bi-Morton order comprises:

in a given preset search range, obtaining the preceding-order M points of the target to-be-decoded point according to a Hilbert-1 order, obtaining the preceding-order N1 points and post-order N2 points of the target to-be-decoded point according to a Hilbert-2 order, and obtaining the S neighboring points with the closest Manhattan distance to the target to-be-decoded point within a target range determined based on M, N1, and N2; or

in the given preset search range, obtaining the preceding-order M points of the target to-be-decoded point according to a Morton-1 order, obtaining the preceding-order N1 points and post-order N2 points of the target to-be-decoded point according to a Morton-2 order, and obtaining the S neighboring points with the closest Manhattan distance to the target to-be-decoded point within a target range determined based on M, N1, and N2; wherein

M, N1, and N2 are all positive integers.

**33.** The method according to claim 32, wherein a search range of the Hilbert-1 order or Morton-1 order is a first preset range, a preceding-order search range of the Hilbert-2 order or Morton-2 order is a second preset range, and a post-order search range of the Hilbert-2 order or Morton-2 order is a third preset range;

the binary bit stream comprises a first attribute parameter and a second attribute parameter, wherein the first attribute parameter is used to represent the first preset range and the second attribute parameter is used to represent the second preset range; and

in a case that the post-order search range of the Hilbert-2 order or Morton-2 order is the third preset range, the binary bit stream further comprises a third attribute parameter, wherein the third attribute parameter is used to represent the third preset range.

**34.** The method according to claim 32, wherein the given preset search range is determined based on a correlation between an initial number of points of a point cloud sequence and a bounding box volume of an input point cloud.

**35.** The method according to claim 31, wherein the determining initial attribute prediction information for the target to-be-decoded point based on the S neighboring points comprises:
determining the initial attribute prediction information for the target to-be-decoded point based on each neighboring point in the S neighboring points and a corresponding second weight, wherein the second weight is a reciprocal of a Manhattan distance between the target to-be-decoded point and the neighboring point.

**36.** The method according to claim 26, wherein the third information comprises the K to-be-decoded points, and before the determining, based on fourth information associated with the third information, whether to perform inverse DCT transform on the K to-be-decoded points, the method further comprises:

obtaining T neighboring points of a reference point by using the 1st point of the K to-be-decoded points as the reference point;

obtaining R neighboring points with a closest Manhattan distance to the reference point in the T neighboring points;

obtaining L neighboring points, with a closest Manhattan distance to a target to-be-decoded point of the K to-be-decoded points, in the R neighboring points, wherein the target to-be-decoded point is any one of the K to-be-decoded points;

determining initial attribute prediction information for the target to-be-decoded point based on the L neighboring points; and

determining attribute prediction information for the target to-be-decoded point based on a first weight corresponding to the target to-be-decoded point and the initial attribute prediction information; wherein

T, R, and L are all positive integers.

**37.** The method according to claim 36, wherein the determining initial attribute prediction information for the target to-be-decoded point based on the L neighboring points comprises:
determining the initial attribute prediction information for the target to-be-decoded point based on each neighboring point in the L neighboring points and a corresponding second weight, wherein the second weight is a reciprocal of a Manhattan distance between the target to-be-decoded point and the neighboring point.

**38.** The method according to any one of claims 31 to 37, wherein a sum of the first weights respectively corresponding to the K to-be-decoded points is 1.

**39.** The method according to claim 25, wherein before the performing inverse DCT transform on K to-be-decoded points, the method further comprises:

obtaining a transform coefficient of the K to-be-decoded points; and
performing inverse quantization on the transform coefficient to obtain an inverse-quantized transform coefficient; and
the performing inverse DCT transform on K to-be-decoded points comprises:
performing inverse DCT transform on the K to-be-decoded points based on the inverse-quantized transform coefficient.

**40.** The method according to claim 39, wherein the transform coefficient comprises a high-frequency coefficient and a low-frequency coefficient, and the performing inverse quantization on the transform coefficient to obtain an inverse-quantized transform coefficient comprises:

obtaining a high-frequency coefficient quantization step corresponding to the high frequency coefficient, and obtaining a low-frequency coefficient quantization step corresponding to the low-frequency coefficient; and performing inverse quantization on the high frequency coefficient based on the high frequency coefficient and the high frequency coefficient quantization step, and performing inverse quantization on the low-frequency coefficient based on the low-frequency coefficient and the low-frequency coefficient quantization step.

41. The method according to claim 40, wherein the obtaining a high-frequency coefficient quantization step corresponding to the high frequency coefficient, and obtaining a low-frequency coefficient quantization step corresponding to the low-frequency coefficient comprises:
obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-decoded points.

42. The method according to claim 41, wherein the obtaining the high-frequency coefficient quantization step corresponding to the high-frequency coefficient, and obtaining a low-frequency coefficient quantization step corresponding to the low-frequency coefficient, based on a distribution status of components corresponding to attribute information for the K to-be-decoded points comprises:

in a case that distribution of the components corresponding to the attribute information for the K to-be-decoded points is flat, the quantization step of the high-frequency transform coefficient is a sum of an original quantization step, a preset quantization step offset, and a high-frequency coefficient quantization step offset, and the quantization step of the low-frequency transform coefficient is a sum of an original quantization step, a preset quantization step offset, and a low-frequency coefficient quantization step offset; and
in a case that distribution of the components corresponding to the attribute information for the K to-be-decoded points is not flat, the quantization step of the high-frequency coefficient is a sum of an original quantization step, a preset quantization step offset, and a low-frequency coefficient quantization step offset, and the quantization step of the low-frequency coefficient is equal to the quantization step of the high frequency coefficient.

43. The method according to claim 40, wherein a value obtained after quantization of the high frequency coefficient is 0 in a case that the high frequency coefficient is less than a first preset threshold, and a value obtained after quantization of the low-frequency coefficient is 0 in a case that the low-frequency coefficient is less than a second preset threshold.

44. The method according to claim 39, wherein the method further comprises:
in a case that it is determined not to perform inverse DCT transform on the K to-be-decoded points, quantizing the transform coefficient of the K to-be-decoded points, so as to obtain the attribute residual information for the K to-be-decoded points.

45. The method according to claim 26, wherein before the obtaining third information, the method further comprises:

obtaining identification information from a binary bit stream, wherein the identification information is used to indicate whether to perform the method; and
determining, based on the identification information, whether to perform the method.

46. A point cloud attribute information encoding apparatus, comprising:

a first transform module, configured to perform discrete cosine transform DCT transform on K to-be-coded points to obtain a transform coefficient of the K to-be-coded points; and
an encoding module, configured to quantize the transform coefficient of the K to-be-coded points and perform entropy coding based on a quantized transform coefficient, to generate a binary bit stream.

47. A point cloud attribute information decoding apparatus, comprising:

a second transform module, configured to perform inverse discrete cosine transform DCT transform on K to-be-decoded points to obtain attribute residual information for the K to-be-decoded point; and
a decoding module, configured to obtain attribute reconstruction information for the K to-be-decoded points based on the attribute residual information and attribute prediction information that are for the K to-be-decoded points, so as to decode un-decoded points in a to-be-decoded point cloud.

48. A terminal, comprising a processor, a memory, and a program or instructions stored in the memory and capable of running on the processor, wherein when the program or the instructions are executed by the processor, the steps of the point cloud attribute information encoding method according to any one of claims 1 to 24 are implemented, or the steps of the point cloud attribute information decoding method according to any one of claims 25 to 45 are implemented.

49. A readable storage medium, wherein the readable storage medium stores a program or instructions, and when the program or instructions are executed by a processor, the steps of the point cloud attribute information encoding method according to any one of claims 1 to 24 are implemented, or the steps of the point cloud attribute information decoding method according to any one of claims 25 to 45 are implemented.

50. A chip, comprising a processor and a communication interface, wherein the communication interface is coupled to the processor, and the processor is configured to execute a program or instructions to implement the steps of the point cloud attribute information encoding method according to any one of claims 1 to 24, or the steps of the point cloud attribute information decoding method according to any one of claims 25 to 45.

51. A computer program product, wherein the computer program product is stored in a non-volatile storage medium, and the computer program product is executed by at least one processor to implement the steps of the point cloud attribute information encoding method according to any one of claims 1 to 24, or the steps of the point cloud attribute information decoding method according to any one of claims 25 to 45.

52. A communication device, configured to perform the steps of the point cloud attribute information encoding method according to any one of claims 1 to 24, or the steps of the point cloud attribute information decoding method according to any one of claims 25 to 45.

FIG. 1

FIG. 2

| Obtain first information | 301 |

| Determine, based on second information associated with the first information, whether to perform DCT transform on K to-be-coded points | 302 |

| In a case that it is determined to perform DCT transform on the K to-be-coded points, perform DCT transform on the K to-be-coded points to obtain a transform coefficient of the K to-be-coded points | 303 |

| Quantize the transform coefficient of the K to-be-coded points and perform entropy coding based on a quantized transform coefficient, to generate a binary bit stream | 304 |

FIG. 3

FIG. 4

```
┌──────────────────────────────────────────────────────────┐
│                                                          │   ⌐ 501
│                 Obtain third information                 │
│                                                          │
└──────────────────────────────────────────────────────────┘
                            │
                            ▼
┌──────────────────────────────────────────────────────────┐
│  Determine, based on fourth information associated with   │   ⌐ 502
│  the third information, whether to perform inverse DCT    │
│       transform on K to-be-decoded points                │
└──────────────────────────────────────────────────────────┘
                            │
                            ▼
┌──────────────────────────────────────────────────────────┐
│  In a case that it is determined to perform inverse DCT   │   ⌐ 503
│  transform on the K to-be-decoded points, perform inverse │
│  DCT transform on the K to-be-decoded points, so as to    │
│  obtain attribute residual information for the K          │
│            to-be-decoded points                          │
└──────────────────────────────────────────────────────────┘
                            │
                            ▼
┌──────────────────────────────────────────────────────────┐
│  Obtain attribute reconstruction information for the K    │   ⌐ 504
│  to-be-decoded points based on the attribute residual     │
│  information for the K to-be-decoded points and attribute │
│  prediction information, so as to decode un-decoded       │
│        points in a to-be-decoded point cloud             │
└──────────────────────────────────────────────────────────┘
```

FIG. 5

Point cloud attribute information
encoding apparatus — 600

First obtaining module — 601

First determining module — 602

First transform module — 603

Encoding module — 604

FIG. 6

Point cloud attribute information decoding apparatus — 700

Second obtaining module — 701

Second determining module — 702

Second transform module — 703

Decoding module — 704

FIG. 7

800

Communication device

801

Processor

802

Memory

FIG. 8

900

Terminal

901 — Radio frequency unit

902 — Network module

910 — Processor

909 — Memory
- Application program
- Operating system

903 — Audio output unit

904 — Input unit
- Graphics processing unit — 9041
- Microphone — 9042

908 — Interface unit

907 — User input unit
- Touch panel — 9071
- Other input devices — 9072

906 — Display unit
- Display panel — 9061

905 — Sensor

FIG. 9

## INTERNATIONAL SEARCH REPORT

| International application No. |
|---|
| **PCT/CN2022/098193** |

**A. CLASSIFICATION OF SUBJECT MATTER**

H04N 19/60(2014.01)i; H04N 19/625(2014.01)i; H04N 19/12(2014.01)i; H04N 19/124(2014.01)i

According to International Patent Classification (IPC) or to both national classification and IPC

**B. FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNABS; CNTXT; ENTXTC; CNKI; 万方, WANFANG: 点云, 雷达, LiDAR, 属性, 颜色, 压缩, 编码, G-PCC, 离散余弦变换, DCT, DST, DWT, 频域, 变换, 转换, 预测, 残差, 误差, 是否, 跳过, 绕过, TSM, 阈值, 量化; VEN; USTXT; WOTXT; EPTXT; IEEE: point 1w cloud?, LiDAR, G-PCC, compress, attribute, color, Discrete Cosine Transform, DCT, DST, DWT, frequency domain, transverter, transform, predict+, residual, error, differ+, skip+, TSM, quantiz+

**C. DOCUMENTS CONSIDERED TO BE RELEVANT**

| Category* | Citation of document, with indication, where appropriate, of the relevant passages | Relevant to claim No. |
|---|---|---|
| X | CN 111953998 A (XIDIAN UNIVERSITY) 17 November 2020 (2020-11-17) description, paragraphs 0054-0119 | 1, 5-6, 15-21, 25, 29-30, 39-43, 46-52 |
| Y | CN 111953998 A (XIDIAN UNIVERSITY) 17 November 2020 (2020-11-17) description, paragraphs 0054-0119 | 2-4, 7-14, 22-24, 26-28, 31-38, 44-45 |
| Y | US 2019200046 A1 (INTEL CORP.) 27 June 2019 (2019-06-27) description, paragraphs 0022 and 0063-0068 | 2-4, 7-14, 22-24, 26-28, 31-38, 44-45 |
| X | CN 108322742 A (PEKING UNIVERSITY SHENZHEN GRADUATE SCHOOL) 24 July 2018 (2018-07-24) description, paragraphs 0044-0062 | 1, 5-6, 15-21, 25, 29-30, 39-43, 46-52 |
| X | US 2018053324 A1 (MITSUBISHI ELECTRIC RES LABORATORIES, INC.) 22 February 2018 (2018-02-22) description, paragraphs 0014-0109 | 1, 5-6, 15-21, 25, 29-30, 39-43, 46-52 |
| A | CN 112335242 A (KOREA ELECTRONICS & TELECOMMUNICATIONS RESEARCH INSTITUTE et al.) 05 February 2021 (2021-02-05) entire document | 1-52 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2022** | **20 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2022/098193** |

**C.     DOCUMENTS CONSIDERED TO BE RELEVANT**

| Category* | Citation of document, with indication, where appropriate, of the relevant passages | Relevant to claim No. |
|---|---|---|
| A | CN 112449754 A (SZ DJI TECHNOLOGY CO., LTD. et al.) 05 March 2021 (2021-03-05) entire document | 1-52 |
| A | WO 2021062771 A1 (GUANGDONG OPPO MOBILE TELECOMMUNICATIONS CORP., LTD.) 08 April 2021 (2021-04-08) entire document | 1-52 |
| A | US 2019208200 A1 (INTERDIGITAL VC HOLDINGS, INC.) 04 July 2019 (2019-07-04) entire document | 1-52 |
| A | EP 3699867 A1 (NOKIA TECHNOLOGIES OY) 26 August 2020 (2020-08-26) entire document | 1-52 |
| A | US 2019007682 A1 (PANASONIC IP CORP. OF AMERICA) 03 January 2019 (2019-01-03) entire document | 1-52 |

Form PCT/ISA/210 (second sheet) (January 2015)

INTERNATIONAL SEARCH REPORT
Information on patent family members

International application No.

**PCT/CN2022/098193**

| Patent document cited in search report | | | Publication date (day/month/year) | Patent family member(s) | | | Publication date (day/month/year) |
|---|---|---|---|---|---|---|---|
| CN | 111953998 | A | 17 November 2020 | None | | | |
| US | 2019200046 | A1 | 27 June 2019 | US | 10708627 | B2 | 07 July 2020 |
| CN | 108322742 | A | 24 July 2018 | US | 2020366932 | A1 | 19 November 2020 |
| | | | | WO | 2019153326 | A1 | 15 August 2019 |
| | | | | CN | 108322742 | B | 16 August 2019 |
| | | | | US | 11122293 | B2 | 14 September 2021 |
| US | 2018053324 | A1 | 22 February 2018 | JP | 2019521417 | A | 25 July 2019 |
| | | | | EP | 3501005 | A1 | 26 June 2019 |
| | | | | WO | 2018034253 | A1 | 22 February 2018 |
| | | | | JP | 6676193 | B2 | 08 April 2020 |
| CN | 112335242 | A | 05 February 2021 | WO | 2020004912 | A1 | 02 January 2020 |
| | | | | KR | 20200000828 | A | 03 January 2020 |
| | | | | US | 2021227221 | A1 | 22 July 2021 |
| | | | | US | 11277612 | B2 | 15 March 2022 |
| | | | | US | 2022150500 | A1 | 12 May 2022 |
| CN | 112449754 | A | 05 March 2021 | WO | 2021000334 | A1 | 07 January 2021 |
| WO | 2021062771 | A1 | 08 April 2021 | CN | 114009014 | A | 01 February 2022 |
| US | 2019208200 | A1 | 04 July 2019 | JP | 2019534600 | A | 28 November 2019 |
| | | | | KR | 20190052013 | A | 15 May 2019 |
| | | | | EP | 3520400 | A1 | 07 August 2019 |
| | | | | WO | 2018060329 | A1 | 05 April 2018 |
| | | | | CN | 109792520 | A | 21 May 2019 |
| | | | | EP | 3301915 | A1 | 04 April 2018 |
| | | | | US | 10834389 | B2 | 10 November 2020 |
| | | | | EP | 3520400 | B1 | 29 December 2021 |
| | | | | JP | 7043148 | B2 | 29 March 2022 |
| EP | 3699867 | A1 | 26 August 2020 | None | | | |
| US | 2019007682 | A1 | 03 January 2019 | JP | 2019017066 | A | 31 January 2019 |
| | | | | US | 2022046241 | A1 | 10 February 2022 |
| | | | | US | 11184612 | B2 | 23 November 2021 |

Form PCT/ISA/210 (patent family annex) (January 2015)

**EP 4 354 872 A1**

**REFERENCES CITED IN THE DESCRIPTION**

**Patent documents cited in the description**

- CN 202110654116
- CN 202110817311